(19)

Europäisches
Patentamt

European
Patent Office

Office européen
des brevets

(11)     **EP 2 760 658 B1**

(12)     **EUROPÄISCHE PATENTSCHRIFT**

(45) Veröffentlichungstag und Bekanntmachung des
Hinweises auf die Patenterteilung:
**17.06.2020   Patentblatt 2020/25**

(21) Anmeldenummer: **12766100.7**

(22) Anmeldetag: **28.09.2012**

(51) Int Cl.:
***B29C 48/04*** *(2019.01)*       *B29C 48/54* *(2019.01)*
*B29C 48/57* *(2019.01)*       *B29C 48/59* *(2019.01)*
*B29C 48/64* *(2019.01)*

(86) Internationale Anmeldenummer:
**PCT/EP2012/069201**

(87) Internationale Veröffentlichungsnummer:
**WO 2013/045623 (04.04.2013 Gazette 2013/14)**

(54) **VORRICHTUNG UND VERFAHREN ZUR ENTFERNUNG VON FLÜCHTIGEN BESTANDTEILEN AUS POLYMERHALTIGEN MEDIEN**

APPARATUS AND METHOD FOR REMOVING VOLATILE COMPONENTS FROM POLYMER-CONTAINING MEDIA

DISPOSITIF ET PROCÉDÉ POUR ÉLIMINER LES SUBSTANCES VOLATILES RÉSIDUELLES ISSUES DE MATIÈRES CONTENANT DES POLYMÈRES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **28.09.2011   EP 11007893**

(43) Veröffentlichungstag der Anmeldung:
**06.08.2014   Patentblatt 2014/32**

(73) Patentinhaber: **ARLANXEO Deutschland GmbH
41540 Dormagen (DE)**

(72) Erfinder:
• **KIRCHHOFF, Joerg
  51061 Koeln (DE)**
• **KOENIG, Thomas
  51375 Leverkusen (DE)**
• **BIERDEL, Michael
  51373 Leverkusen (DE)**

(74) Vertreter: **Kutzenberger Wolff & Partner
Waidmarkt 11
50676 Köln (DE)**

(56) Entgegenhaltungen:
**US-A- 4 173 417     US-A- 5 487 602**

## Beschreibung

Die vorliegende Erfindung betrifft ein Verfahren zur Entgasung polymerhaltige*r Medien, wie insbesondere Polymerschmelzen, Polymerlösungen und -dispersionen sowie Entgasungsvorrichtungen zur Durchführung des vorgenannten Verfahrens.

Extrusion ist ein vielfach angewandtes Verfahren bei der Herstellung, Aufbereitung und Verarbeitung von Polymeren. Unter Extrusion wird hier und im Folgenden die Behandlung eines Mediums in einem Ein- oder Mehrwellenextruder verstanden.

Bei der Herstellung von Polymeren findet die Extrusion industrielle Anwendung zur Entfernung von flüchtigen Bestandteilen wie Monomeren, Oligomeren sowie Hilfs- und Lösungsmitteln aus polymerhaltigen Medien ([1], S. 192 bis 212; [1] = Klemens Kohlgrüber. Twin-Screw Extruders, Hanser Verlag München 2007). Weiterhin kann gegebenenfalls zusätzlich bei der Extrusion eine chemische Modifikation des Polymers wie z.B. durch Pfropfung, Modifikation von funktionellen Gruppen oder Modifikation des Molekulargewichtes durch gezielten Auf- oder Abbau des Molekulargewichts erfolgen oder das Polymer z.B. durch Zumischung von Additiven konfektioniert werden.

Den Vorteilen der Extrusion steht der Nachteil gegenüber, dass insbesondere in den Kammbereichen der typischerweise in den Extrudern als Behandlungselement eingesetzten Schneckenelemente besonders viel Energie in die zu extrudierenden polymerhaltigen Medien dissipiert wird, was lokal zu starken Überhitzungen führen kann. Diese lokalen Überhitzungen können zu Schädigungen im Produkt wie z.B. Veränderung in Geruch, Farbe, chemischer Zusammensetzung oder zur Bildung von Inhomogenitäten im Produkt wie Gelkörpern oder Stippen führen.

Schädigungsmuster diverser Polymere bei lokaler Überhitzung sind beispielsweise dargestellt in WO2009/153000 A auf S. 22 Z. 7 bis S. 24, Z. 25 beschrieben.

Insbesondere Kautschuke wie beispielsweise Polybutadien (BR), Naturkautschuk (NR), Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien- Acrylnitril-Kautschuk (HNBR) sowie Ethylen-Proplyen-Dien-Copolymeren (EPDM) neigen bei zu hoher Temperatur zur Vernetzung und Gelbildung, was zu massiven Verschlechterung von mechanischen Eigenschaften der daraus hergestellten Produkte führt. Bei Chlor- und Brombutylkautschuk sowie Chloroprenkautschuken kann unter erhöhter Temperatur korrosiver Chlor- bzw. Bromwasserstoff freigesetzt werden, der wiederum die weitere Zersetzung des Polymers katalysiert.

Die Reaktionsgeschwindigkeit, mit der eine Polymerschädigung von statten geht, hängt von der Temperatur ab und die Reaktionsgeschwindigkeitskonstante k(T) kann dafür mit dem Arrhenius-Ansatz beschrieben werden:

$$k(T)=A*exp(-E_A/(R*T)).$$

In dieser Gleichung bedeuten k die Reaktionsgeschwindigkeitskonstante, T die absolute Temperatur in [K], A der Frequenzfaktor, $E_A$ die Aktivierungsenergie in [J/mol] und R die universelle Gaskonstante in [J/(mol*K)].

Verfahren zur Extrusion polymerhaltiger Medien sollten daher auch aus energetischer Sicht generell so ausgestaltet sein, dass der mittlere Temperaturanstieg möglichst gering ausfällt und lokale Temperaturspitzen, wie sie zum Beispiel in den Kammbereichen eines Schneckenelements mit einem klassischen Erdmenger-Schneckenprofil gemäß dem Stand der Technik auftreten, vermieden werden.

Im Stand der Technik findet sich eine Vielzahl von Lösungsansätzen, die dieses Problem adressieren.

Aus DE 1 180 718 A ist eine Zweiwellen-Schneckenmaschine mit eingängigen Behandlungs- bzw. Schneckenelementen bekannt. Im Querschnitt setzt sich die Außenkontur der Schneckenelemente aus Kreisbögen zusammen. Die in Drehrichtung liegende aktive Flanke weist eine Außenkontur auf, die aus drei Kreisbögen zusammengesetzt ist, deren Mittelpunkte entweder auf dem Außenradius oder auf der Längsachse der Schneckenelemente liegen. Nachteilig ist, dass die Schneckenelemente nur eine geringe Flexibilität bei der Einstellung der auf das zu bearbeitende Material wirkenden Scher- und/oder Dehnströmungen ermöglicht.

Aus WO2009/152968 und WO2011/039016 sind Behandlungselemente für Extruder, wie insbesondere Schneckenelemente, offenbart, die durch ihre abgerundete Form während der Extrusion weniger Energieeintrag in polymerhaltige Medien verursachen.

Aus der EP 1 617 985 A1 ist eine Aufbereitungsanlage sowie ein Verfahren zur Entgasung von bimodalen Polyolefinen bekannt. In der Aufbereitungsanlage sind zwei gleichläufige Zweiwellen-Extruder hintereinander angeordnet, wobei der in Förderrichtung gesehen zweite Extruder eine Entgasungszone zum Entgasen der aufzubereitenden Polyolefine aufweist. Nachteilig bei dieser Aufbereitungsanlage ist, dass die Entgasungsleistung, also die Höhe des entgasten Anteils an unerwünschten flüchtigen Bestandteilen, gering ist.

Aus der EP 0861717 A1 ist ein Verfahren und eine Vorrichtung zur Verarbeitung stark ausgasender Materialien bekannt. Die Extrusionsvorrichtung weist einen Hauptextruder sowie zwei seitlich in diesen mündende Nebenextruder auf, so dass der in einer Verdampfungszone des Hauptextruders entstehende Gasstrom in mindestens drei Teilströme aufgeteilt wird, die dann aus den Extrudern abgeführt werden.

EP 1 127 609 A2 offenbart ein Verfahren zur Entfernung von flüchtigen Bestandteilen aus einem polymerhaltigen Medium unter Verwendung eines Kneters. Dabei wird die Energie teilweise durch die Wand des Kneters eingeleitet und zum Verdampfen des Lösemittels eingesetzt. Weiterhin wird Energie durch die rotierende Welle des Kneters als mechanische Energie zugeführt. Das Einführen von mechanischer Energie über den Kneter hängt stark von der Viskosität des Produkts ab, was die Flexibilität und somit Attraktivität des Verfahrens für industrielle Verfahren stark verringert.

EP 1 165 302 A1 offenbart eine Vorrichtung und ein Verfahren zum Entgasen von Kunststoffen, mit einer Rückwärtsentgasungszone und mehreren Entgasungszonen in Förderrichtung, die unter Vakuum betrieben werden. Das Vakuum ist notwendig, um niedrige Restkonzentrationen an flüchtigen Bestandteilen zu erreichen.

In "Process Machinery", Teil I und II, März und April 2000; Autor: C.G. Hagberg sowie in WO2010/031823 A und PCT/EP2011/054415 wird die direkte Entgasung von Kautschuklösungen unter Verwendung eines Flash-Tanks und eines oder mehrerer Extruder offenbart.

US 4,055,001 offenbart ein Verfahren zur Herstellung von Polymeren wie Butylkautschuk mit einem Wassergehalt von weniger als 0,1 Gew.-% unter Verwendung von Ultraschallsonotroden während des Trocknungsprozesses. Die sehr hohe Scherbelastung durch Ultraschall ist jedoch für den grosstechnischen Einsatz ungünstig.

US 4,173,417 A1 offenbart eine Extruderschnecke mit einem schraubenförmigen Förderboden mit einem schraubenförmigen Sperrfeld versehen, um ein Paar paralleler schraubenförmiger Strömungskanäle zu bilden.

US 5,487,602 A1 offenbart Mehrschnecken-Extrusionsverbundmaschinen mit gleichlaufenden Schneckenanordnungen, die Sätze von modularen Mischelementen mit unsymmetrischen Geometrien und relativ großen Flügelspalten beinhalten.

US 2001/056176 A1 offenbart ein einstufiges Verfahren zur Konzentration von Kautschuklösungen. Die Kautschuklösung wird dabei mit Wasserdampf erwärmt, um vorhandene Lösemittel in einem Schritt durch Entgasen unter Vakuum zu entfernen, wodurch weiße Krümel erzeugt werden. US 2001/056176 A1 erfordert dabei einen großen volumetrischen Dampfstrom zur Entfernung flüchtiger Komponenten bei niederem Dampfdruck und führt zum unerwünschten Einschluss zusätzlichen Wassers in die Krümel.

Die vorgenannten Lösungsansätze sind jedoch für die Extrusion von polymerhaltigen Medien, insbesondere kautschukhaltigen Medien, noch verbesserbar.

Der Erfindung lag daher die Aufgabe zugrunde, ein Verfahren zur Entfernung von flüchtigen Bestandteilen aus polymerhaltigen Medien bereitzustellen, das eine hohe Entgasungsleistung in Verbindung mit einem hohen Polymerdurchsatz bei gleichzeitig geringem Restgehalt an flüchtigen Bestandteilen ermöglicht.

Gegenstand der Erfindung ist nun eine Vorrichtung, die zur Entfernung von flüchtigen Verbindungen aus polymerhaltigen Medien besonders geeignet ist, und zumindest einen Extruder aufweist, der wiederum aufweist:

- ein Gehäuse und n Gehäusebohrungen $B_n$ mit den dazugehörigen Bohrungsdurchmessern $D_n$ wobei n eine ganze Zahl, vorzugsweise eine ganze Zahl von 1 bis 16, besonders bevorzugt von 1 bis 12, ganz besonders bevorzugt 2 bis 8 und noch weiter bevorzugt 2 ist und wobei sich die Gehäusebohrungen für den Fall dass n größer als 1 ist, vorzugsweise gegenseitig durchdringen und ebenfalls vorzugsweise parallel angeordnet sind

- ein oder mehrere drehantreibbare Wellen $W_n$, die jeweils in einer der Gehäusebohrungen $B_n$ konzentrisch angeordnet sind, eine Drehachse $A_n$ aufweisen und mit Behandlungselementen ausgestattet sind, deren Querschnittsprofil in Umfangsrichtung aufweisen

    ♦ m relative Maxima $R^m_{max\,n}$ bezüglich der Radialausdehnung des Querschnittsprofils zur Drehachse $A_n$ der Welle $W_n$, wobei m eine ganze Zahl von 1 bis 8, vorzugsweise 1 bis 4, besonders bevorzugt 1, 2 oder 3, ganz besonders bevorzugt 1 oder 2 und noch weiter bevorzugt 2 ist

    ♦ einen Maximalwert $R_{max\,n}$ bezüglich der Radialausdehnung des Querschnittsprofils zur Drehachse $A_n$ der Welle $W_n$ wobei für $R_{max\,n}$ gilt, dass:

$$R_{max\,n} <= (D_n/2)$$

- zumindest eine Zuführzone,

- eine oder mehrere Entgasungszonen umfassend jeweils zumindest eine Entgasungsöffnung, die zum Austrag von flüchtigen Bestandteilen aus einem polymerhaltigen Medium aus dem Extruder geeignet ist

- zumindest eine Austragszone

wobei der Extruder als Behandlungselemente Schneckenelemente mit einer Steigungshöhe t aufweist, die so gestaltet sind, dass mindestens zwei der drei folgenden Bedingungen erfüllt sind:

S1) das Querschnittsprofil weist bezogen auf die Radialausdehnung der Profilkurve zumindest ein relatives Maximum $R^m_{max\,n}$ auf, für das gilt:
$0{,}430\,D_n >= R^m_{max\,n} < 0{,}485\,D_n$, bevorzugt $0{,}440\,D_n < R^m_{max\,n} < 0{,}482\,D_n$ und besonders bevorzugt $0{,}450\,D_n < R^m_{max\,n} < 0{,}480\,D_n$

S2) $1{,}60\,D_n < t < 3{,}00\,D_n$, bevorzugt $1{,}80\,D_n < t < 2{,}50\,D_n$ und besonders bevorzugt $1{,}90\,D_n < t < 2{,}40\,D_n$

S3) das Querschnittsprofil des jeweiligen Schneckenelements weist an den bezogen auf die in Drehrichtung vorn liegenden aktiven Flanken im Bereich der Radialausdehnung von $0{,}90\,R_{max}$ bis $R_{max}$, bevorzugt $0{,}80\,R_{max}$ bis $R_{max}$, besonders bevorzugt $0{,}50\,R_{max}$ bis $R_{max}$ und noch weiter bevorzugt im gesamten Bereich von $0$ bis $R_{max}$ keinen Tangentenwinkel $\beta$ auf, der größer ist als 25°, bevorzugt größer als 22°, besonders bevorzugt 15° und ganz besonders bevorzugt 10°, wobei der Tangentenwinkel $\beta$ definiert ist als

♦ der kleinere der beiden Winkel, die bei der Anlegung der Tangenten an einem beliebigen Punkt auf dem Querschnittsprofil des Behandlungselements auftreten, an dem das Querschnittsprofil nicht stetig differenzierbar ist

♦ und 0° beträgt an einem beliebigen Punkt auf dem Querschnittsprofil des Behandlungselements, an dem das Querschnittsprofil stetig differenzierbar ist.

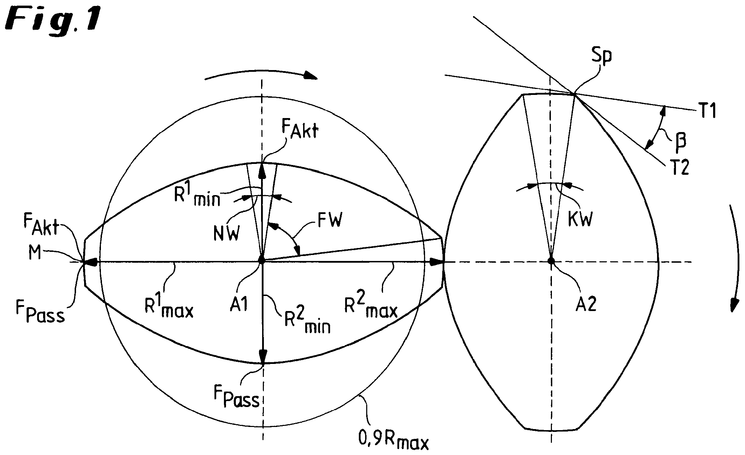

Der Rahmen der Erfindung umfasst neben den explizit angeführten Merkmalen und Merkmalskombinationen auch alle beliebigen Kombinationen von Vorzugsbereichen die für jedes Merkmal spezifiziert sind.
Querschnittsprofil bedeutet im Rahmen der Erfindung das Profil eines Behandlungselementes insbesondere eines Schneckenelementes in einer zur Drehachse $A_n$ der Welle, auf dem das Behandlungselement angeordnet ist, orthogonalen Ebene.
Der Begriff Schneckenelemente umfasst sowohl die heutzutage übliche Modulbauweise aus einer Kernwelle und Schneckenelementen, die eine Aufnahmeöffnung für die Kernwellen besitzen als auch Schnecken in Massivbauweise z.B. in einstückiger Form, Schneckenwellen, die aus einzelnen Teilsegmenten, die in massivbauweise hergestellt sind, bestehen, oder kombinationen aus den oben genannten Bauweisen.
Die obengenannten geometrischen Verhältnisse werden anhand eines klassischen sogenannten zweigängigen Erdmenger-Profil für einen dichtkämmenden Doppelschneckenextruder beschrieben, wie es in Fig. 1 dargestellt ist. Das Erdmenger-Profil weist beispielsweise zwei relative Maxima $R^1_{max}$ und $R^2_{max}$ im Bereich der Schneckenkämme auf, die jeweils den Maximalwert $R_{max}$ bezüglich der Radialausdehnung des Querschnittsprofils zu den Drehachsen A1 und A2 besitzen.
In der Literatur werden im Allgemeinen Schneckenelemente, die p relative Maxima $R^p_{max}$ aufweisen, die jeweils mindestens 85 % vorzugsweise mindestens 95% des Maximalwerts $R_{max}$ bezüglich der Radialausdehnung des Querschnittsprofils zur Drehachse $A_n$ der Welle $W_n$ aufweisen, auch als p-gängiges Schneckenprofil bezeichnet.
Die bezogen auf die in Drehrichtung vorn liegenden aktiven Flanken sind im Rahmen dieser Erfindung nun diejenigen Bereiche des Querschnittsprofils der Schneckenelemente von einem relativen Maximum $R^m_{max\,n}$ zum in Drehrichtung liegenden nächsten relativen Minimum $R^m_{min\,n}$ bezüglich der Radialausdehnung des Querschnittsprofils zur Drehachse $A_n$ der Welle $W_n$. Sofern das relative Maximum $R^m_{max\,n}$ oder das relative Minimum $R^m_{min\,n}$ ein einziger Punkt ist, ist dieser definitionsgemäß weder Bestandteil der aktiven Flanke ($F_{akt}$) noch der passiven Flanke $F_{pass}$. Gleiches gilt für den Mittelpunkt M eines Kammbereiches, der zum Beispiel über einen Kammwinkel KW hinweg bezüglich der Funktion $R(\varphi)$ des Schneckenprofils, wobei $\varphi$ der Winkel in Umlaufrichtung zur Drehachse A ist, ein plateauartiges relatives Maximum aufweist. In diesem Fall ist, sowie in Fig. 1 gezeigt, der Bereich zwischen dem Mittelpunkt des plateauartigen Maximums bis zum in Drehrichtung des Schneckenelementes gelegenen Endpunkt des relativen Maximums definitionsgemäß ebenfalls Teil der aktiven Flanke $F_{akt}$. Der Endpunkt des relativen Maximums in Drehrichtung des Schneckenelementes ist im gezeigten Erdmenger-Profil in Fig. 1 der Schnittpunkt Sp.
In Fig. 1 ist weiterhin beispielhaft der Radius $0{,}9\,R_{max}$ angegeben, womit erkennbar wird, dass sich der Schnittpunkt Sp des Kamm- und des Flankenbogens ausserhalb dieses Radius d.h. zwischen $0{,}9\,R_{max}$ und $R_{max}$ befindet und im Profil einen Knick erzeugt, der auf dem Schneckenelement eine Kante erzeugt. Ebenfalls in Fig. 1 eingezeichnet sind die Tangenten T1 des Kammbogens und T2 des Flankenbogens, sowie der durch die Tangenten T1 und T2 eingeschlossene kleinere Winkel $\beta$, der für das gezeigte Erdmengerprofil etwa 34° beträgt.

Das gezeigte Erdmenger-Profil erfüllt somit das Merkmal S3) nicht.

Das Merkmal S1) wird in der Literatur auch als Radialspiel beschrieben.

Polymerhaltige Medien sind erfindungsgemäß Medien, die zumindest ein Polymer und zumindest eine flüchtige Verbindung aufweisen.

Polymere können natürliche oder synthetische Polymere sein, vorzugsweise solche mit einem gewichtsmittleren Molekulargewicht von mehr als 2,000 g/mol, besonders bevorzugt mehr als 5,000 g/mol.

Beispiele für natürliche und synthetische Polymere umfassen thermoplastische Polymere wie beispielsweise Polycarbonate, Polyamide, Polyester, insbesondere Polybutylenterephthalat und Polyethylenterephthalat, Polylactide, Polyether, thermoplastische Polyurethane, Polyacetale, Fluorpolymere wie, insbesondere Polyvinylidenfluorid, Polyethersulfone, Polyolefine, insbesondere Polyethylen und Polypropylen, Polyimide, Polyacrylate, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrol- blockcopolymere und Polyvinylchlorid sowie Elastomere wie beispielsweise Kautschuke aus der Reihe Styrol-Butadien-Kautschuke, Naturkautschuke, Butadien-Kautschuke, Isopren-Kautschuke, Ethylen-Propylen-Dien-Kautschuke wie beispielsweise Ethylenpropylendien (M-Klasse) Kautschuke (EPDM), Ethylen-Propylen-Kautschuke, Butadien-Acrylnitril-Kautschuke, hydrierte Nitrilkautschuke, Butylkautschuke, Halobutylkautschuke, Chloropren-Kautschuke, Ethylen-Vinylacetat-Kautschuke, Polyurethan-Kautschuke, Guttapercha, Fluorkautschuke, Siliconkautschuke, Sulfidkautschuke, Chlorsulfonyl-Polyäthylen-Kautschuke sowie beliebige Mischungen der vorgenannten thermoplastischen Polymere und Elastomere.

Im Zusammenhang mit dieser Erfindung bezeichnet der Begriff Butylkautschuk insbesondere ein Copolymer von Isobuten(2-methylpropen) und Isopren(2-methylbuta-1,3-dien). Auf einer molaren Basis liegt der Isoprengehalt in dem Polymer zwischen 0,001% und 5, vorzugsweise zwischen 1,8 und 2,3 Mol%. Butylkautschuk besteht aus linearen Polyisobutenketten mit regellos verteilten Isopreneinheiten. Die Isopreneinheiten führen ungesättigte Stellen in die Polymerkette ein, wodurch eine Vulkanisierung ermöglich wird. Das massengemittelte Molekulargewicht von Butylkautschuk Mw liegt für gewöhnlich zwischen 50.000 und 1.000.000 g/mol, vorzugsweise zwischen 300.000 und 1.000.000 g/mol.

Die halogenierten Butylkautschuke enthalten auch eine gewisse Menge an Halogen, das chemisch an das Polymer gebunden ist. Die Menge an chemisch gebundenem Halogen liegt für gewöhnlich im Bereich von mehr als 0 bis 3 Gew.-% in Bezug auf die Gesamtmasse des Polymers. Die (Halo)butylkautschuke könnten auch Zusatzstoffe enthalten, z.B. 0,0001 bis 4 phr (phr = Teile pro hundert Teile Kautschuk in Bezug auf das Kautschukgewicht), epoxydiertes Sojabohnenöl (ESBO), 0,0001 bis 5 phr Kalziumstearat und 0,0001 bis 0,5 phr Antioxidantien. Andere Zusatzstoffe sind ebenso anwendbar, abhängig von der Anwendung des Butylkautschukprodukts, d.h. Füllstoffe oder Färbungsmittel.

Im Falle von Brombutylkautschuk ist der typische Bromgehalt im Fertigprodukt 1,5 bis 2,5 Gew.-%, vorzugsweise 1,6 bis 2,0 Gew.-%.

Im Fall von Chlorbutylkautschuk ist der typische Chlorgehalt im Fertigprodukt 1,0 bis 1,5 Gew.-%, vorzugsweise 1,15 bis 1,35 Gew.-%.

Die erfindungsgemäß einzusetzenden polymerhaltigen Medien können beispielsweise in Form von Suspensionen, Pasten, Schmelzen, Lösungen, stückigen festen Massen oder Mischformen der vorgenannten Erscheinungformen vorliegen.

Im Rahmen dieser Erfindung bedeutet der Begriff "flüchtige Verbindungen" Verbindungen mit einem Siedepunkt unter 250°C bei einem Druck von 1013 hPa. Flüchtige Verbindungen sind insbesondere Wasser und andere flüchtige anorganische Verbindungen sowie flüchtige, organische Verbindungen. Flüchtige organische Verbindungen sind typischerweise Lösungsmittel, die in der Polymerisation oder in anschließenden Verarbeitungsschritten verwendet werden, Monomere oder Oligomere die beispielsweise aus dem Polymerisationsprozess stammen oder andere organische Verbindungen wie beispielsweise Additive.

Vorzugsweise weist der Extruder ein Gehäuse und n = 1 bis 16, besonders bevorzugt n = 1 bis 12, ganz besonders bevorzugt n= 2 bis 8 und noch weiter bevorzugt n = 2 Gehäusebohrungen $B_n$ auf.

Für den Fall, dass n grösser 1 ist durchdringen sich die Gehäusebohrungen $B_n$ vorzugsweise gegenseitig und sind ebenfalls vorzugsweise parallel angeordnet. Ausführungen, in denen n grösser 1 ist, sich die Gehäusebohrungen nicht durchdringen und vorzugsweise parallel sind, sind eine mögliche Ausführungsform der Erfindung.

Erfindungsgemäß geeignete Extruderarten umfassen somit Einwellen- und Mehrwellenextruder, wie beispielsweise Doppelwellenextruder oder Ringextruder, wobei Doppelwellenextruder bevorzugt sind. Doppelwellenextruder können gegen- oder gleichsinnig drehantreibbar sein. Vorzugsweise sind Mehrwellenextruder wie insbesondere Doppelwellenextruder oder Ringextruder mit dichtkämmenden Behandlungselementen, wie insbesondere selbstreinigenden Schneckenelementen ausgestattet. Mehrwellenextruder können auch extruder mit nicht kämmenden und sich nicht berührenden Extruderwellen bzw. Behandlungselementen sein.

In einer Ausführungsform weist der zumindest eine Extruder der Entgasungsvorrichtung weiterhin zumindest eine Dispergierzone auf. In der Dispergierzone können beispielsweise Strippmittel oder andere Additive dem Polymer zugeführt werden. Die Behandlungselemente der Dispergierzone können beispielsweise Knetelemente, Zahnblöcke, Zahnscheiben oder gezahnte Mischelemente sein. Eine mögliche weitere auswahl an geeigneten Elementen findet sich in [1].

In Bereich der aktiven Flanke eines Schneckenelementes wird das zu extrudierende polymerhaltige Medium bei Drehung der Extruderwelle $W_n$ in ihrer Gehäusebohrung $B_n$ in einen enger werdenden Keil gepresst. Dabei treten Scher- und Dehnströmungen auf, die insbesondere bei der erfindungsgemäßen Entgasung zu einer hohen Oberflächenerneuerung und damit zu einer verbesserten Diffusion flüchtiger Bestandteile aus dem polymerhaltigen Medium führen.

Es wurde überraschenderweise gefunden, dass die Durchsatz- und Entgasungsleistung von Extrudern signifikant gesteigert werden kann, wenn als Behandlungselemente Schneckenelemente im Extruder vorhanden sind, die zwei der Merkmale S1), S2) und S3) wie beispielsweise S1) und S2) oder S2) und S3) oder S1) und S3) oder vorzugsweise alle drei Merkmale S1), S2) und S3) erfüllen.

In einer Ausführungsform werden die Merkmale S1) und S2) oder alle drei Merkmale S1), S2) und S3) erfüllt.

Dabei wurde festgestellt, dass Schneckenelemente, die die beschriebenen Kombinationen der Merkmale S1), S2) und S3) erfüllen, den Energieeintrag trotz hoher Entgasungsleistung so gering halten, dass die oben beschriebenen Schädigungen der extrudierten Polymere weitestgehend oder vollständig vermieden werden können. Dieser Effekt wird insbesondere dann voll genutzt, wenn die Schneckenelemente mit vorgenannten Merkmalen in zumindest einer Entgasungszone eingesetzt werden. Vorzugsweise wird zumindest die letzte Entgasungszone des Extruders mit entsprechenden Schneckenelementen ausgerüstet. In einer weiteren Ausführungsform werden alle Entgasungszonen des Extruders mit entsprechenden Schneckenelementen ausgerüstet. Die Anzahl der Entgasungszonen ist grundsätzlich nicht beschränkt und kann beispielsweise 1 bis 20, bevorzugt 1 bis 10 und besonders bevorzugt 2 bis 8 betragen. Die Entgasungszonen liegen typischerweise in der Förderrichtung des Extruders der Zuführzone nachgeschaltet, die Anordnung zumindest einer Entgasungszone, die in der Förderrichtung des Extruders der Zuführzone vorgeschaltet ist (sog. rückwärtige Entgasungszone) ist bevorzugt.

Entgasungszonen umfassen, dies ist dem Fachmann geläufig, typischerweise zumindest eine Entgasungsöffnung im Extrudergehäuse, die in sogenannte Entgasungsdome münden, die wiederum über Gasableitungen mit einer Kondensatoreinheit verbunden sind, in der die aus den polymerhaltigen Medien entweichenden flüchtigen Verbindungen kondensiert werden. Der Druck in den Entgasungszonen bzw. den Entgasungsdomen wird vorzugsweise über Pumpen wie insbesondere Vakuumpumpen geregelt.

Die flüchtigen Verbindungen, die aus dem polymerhaltigen Medium über die Entgasungsöffnungen und die Entgasungsdöme entweichen, neigen dazu Polymere bzw Produkte mitzureissen, was im schlimmsten Fall zu einer Verstopfung der Entgasungsöffnungen und der Entgasungsdöme führen kann.

Deshalb sind in einer bevorzugten Ausführungsform der Erfindung die Entgasungsöffnungen und der Entgasungsdöme so gestaltet, dass sie einen Austritt von polymerhaltigem Medium bzw Produkt wirkungsvoll verhindern oder reduzieren.

Geeignete Mittel zur Erfüllung dieses Zwecks sind ein- oder mehrwellige insbesondere doppelwellige Stopfschnecken, die an den Entgasungsöffnungen montiert sind und in den Extruder fördernd betrieben werden, oder Rollen oder Riemen, die an der Innenseite der Entgasungsöffnungen angeordnet sind, um polymerhaltigem Medium bzw Produkt zurück in den Extruder zu schieben. Als Alternative oder zusätzlich zu den oben genannten Mitteln können Beschichtungen an den Entgasungsöffnungen eingesetzt werden, die ein Anhaften des Materials an der Oberfläche verringern oder verhindern. Geeignete Beschichtungen sind beispielsweise DLC (diamond-like-carbon), Ethylen-Tetrafluorethylen (ETFE), Polytetrafluorethylen (PTFE) und Nickellegierungen.

Der Druck in den Entgasungsöffnungen und Entgasungsdömen beträgt zum Beispiel zwischen 1 hPa und 2.000 hPa, vorzugsweise zwischen 5 hPa und 900 hPa.

Sofern mehrere Entgasungszonen in der Förderrichtung des Extruders der Zuführzone nachgeschaltet sind, ist es erforderlich zwischen den einzelnen Entgasungszonen Druckaufbauzonen und vorzugsweise zusätzlich Stauelemente zwischenzuschalten um die einzelnen Entgasungszonen gegeneinander abzudichten und somit eine fortschreitende Entgasung in der Förderrichtung des Extruders zu ermöglichen. I diesem Fall können die Entgasungszonen bei unterschiedlichen, insbesondere in förderrichtung des Extruders typischerweise geringer werdenden Drücken betrieben werden.

Während Entgasungszonen typischerweise sogenannte teilgefüllte Zonen mit einem volumimetrischen Füllgrad von etwa 0,1 bis 0,6, vorzugsweise 0,3 bis 0,5 sind, wird in den Druckaufbauzonen und gegebenenfalls am Stauelement ein volumimetrischer Füllgrad von 1 erreicht. Hier spricht man dann von vollgefüllten Zonen oder Abschnitten.

Als Behandlungselemente können in den Druckaufbauzonen beispielsweise übliche Schneckenelemente mit einer geringeren Steighöhe t als in den Entgasungszonen eingesetzt werden.

Als Stauelemente können beispielsweise rückwärts fördernde Elemente, vorwärts fördernde elemente mit kleiner steigung, Knetblöcke, stauscheiben, Zahnmischelemente oder allgemein elemente mit geringem Fördervolumen eingesetzt werden.

Der Extruder kann beispielsweise auch zumindest eine Dispergierzone aufweisen beispielsweise um Strippmittel oder andere Additive in das polymerhaltige Medium einzubringen. Überaschenderweise wurde gefunden, dass die Dispersion im Extruder besonders gut funktioniert, wenn die zumindest eine Dispergierzone als Behandlungselemente Schneckenelemente mit einer Steigungshöhe t aufweist, die so gestaltet sind, dass mindestens zwei der drei folgenden Bedingungen erfüllt sind:

S1) mit den oben genannten Werten einschließlich ihrer Vorzugsbereiche

S3) mit den oben genannten Werten einschließlich ihrer Vorzugsbereiche

S4) $1{,}50 \, D_n < t < 12{,}00 \, D_n$, bevorzugt $1{,}60 \, D_n < t < 10{,}00 \, D_n$ und besonders bevorzugt $2{,}00 \, D_n < t < 9{,}00$.

Sofern dem polymerhaltigen Medium Strippmittel zur Förderung der Entgasung zugeführt werden sollen ist es bevorzugt die Dispergierzonen in Förderrichtung des Extruders den Entgasungszonen vorgeschaltet anzuordnen.

In einer Ausführungsform sind den Entgasungszonen in Förderrichtung des Extruders zumindest teilweise Entspannungselemente vorgeschaltet.

Entspannungselemente können beispielsweise rotierende oder feststehende Lochplatten oder sein.

Solche Lochplatten sind beispielsweise aus JP 59 048136 A, US 3 501 807, DE 34 31 063, DE 623 903 und PCT/EP2011/062636 bekannt.

Als Entspannungselemente können beispielsweise auch rückwärts fördernde Elemente, vorwärts fördernde elemente mit sehr kleiner steigung, Knetblöcke oder stauscheiben eingesetzt werden

In einer bevorzugten Ausführungsform werden feststehende Lochplatten eingesetzt, die mit dem Gehäuse im Betrieb fest verbunden aber entfernbar sind und je eine Aufnahmeöffnung für die Aufnahme jeder im Extruder vorhandenen Welle besitzen und die vorzugsweise wie eine Gleitdichtung für die Wellen dienen. Der Radialabstand s der Aufnahmeöffnung zur Welle beträgt in Relation zur Gehäusebohrung B vorzugsweise $0{,}001 \leq s/D \leq 0{,}02$, vorzugsweise $0.002 \leq s/D \leq 0.01$ und besonders bevorzugt $0.003 \leq s/D \leq 0.006$.

Die Lochplatten weisen eine oder mehrere, vorzugsweise eine Vielzahl von Lochbohrungen auf, wobei die Lochbohrungsdurchmesser einen Durchmesser d von beispielsweise $1 \, mm \leq d \leq 6 \, mm$, vorzugsweise $1.5 \, mm \leq d \leq 5 \, mm$ und besonders bevorzugt $2 \, mm \leq d \leq 4 \, mm$ aufweisen.

In einer ebenfallsbevorzugten Ausführungsform sind die Lochplatten mehrteilig, bevorzugt zweiteilig so ausgestaltet, dass sie aus dem Gehäuse ohne Entfernung der Wellen entnommen werden können.

Der besondere Vorteil des Einsatzes von Lochplatten liegt darin, dass das durch die Lochplatten geführte polymerhaltige Medium im nachgeordneten Freiraum der Entgasungszone strangförmig ausgebildet ist und eine im Vergleich zum polymerhaltige Medium vor der Düsenplatte größere Oberfläche aufweist. Flüchtige Verbindungen können hierdurch auf einfache Weise aus dem polymerhaltige Medium austreten und von diesem getrennt werden.

Im Allgemeinen kann der Extruder ein oder mehrere Zuführöffnungen für die Zuführung von Additiven umfassen, die grundsätzlich überall im Extruder positioniert sein können, vorzugsweise ausserhalb der Entgasungszonen und vorzugsweise in den Dispergierzonen, sofern vorhanden.

Beispiele für Zusatzstoffe die über die Zuführöffnungen zugeführt werden können, insbesondere für (Halo)butylkautschukprodukte umfassen Stabilisierungsmittel, Säurefänger, wie ESBO (epoxydisiertes Sojabohnenöl), Stearate wie Kalziumstearate, Antioxidantien und dergleichen. Beispiele für geeignete Antioxidantien enthalten sterisch behinderte Phenole wie Butylhydroxytoluole und deren Derivate wie Irganox 1010 und 1076, Amine, Mercapto-benzimidazole, gewisse Phosphite und dergleichen.

Alternativ oder zusätzlich können die Zusatzstoffe auch bereits dem polymeren Medium PM vor dem Eintritt in die Entgasungsvorrichtung oder, wenn sie flüssig sind, gemeinsam mit dem Strippmittel in den Extruder zugeführt werden.

Schneckenelemente, die das Merkmal S3) erfüllen können sind grundsätzlich z.B. aus WO2009/152968 A und WO2011/039016 A bekannt.

Vorzugsweise werden erfindungsgemäß Schneckenelemente eingesetzt, deren Querschnittsprofil vollständig durch eine stetig differenzierbare Profilkurve darstell¬ bar ist. Vorzugsweise sind solche Querschnittsprofile zweigängig oder dreigängig. Die Querschnittsprofile solcher Schneckenelemente werden nachstehend auch Schneckenprofile genannt.

Besonders bevorzugt werden vorgenannte Schneckenelemente in dichtkämmenden Mehrwellenextrudern wie insbesondere Doppelwellenextrudern, vorzugsweise gleichlaufenden Doppelwellenextrudern eingesetzt.

Die Querschnittprofile solcher Schneckenelemente lassen sich durch eine Anordnung von Kreisbö¬ gen eindeutig beschreiben und setzen sich in ihrer Gesamtheit aus n Kreisbögen zusammen, wobei n größer oder gleich vier ist. Jeder der n Kreisbögen besitzt einen Anfangs- und einen Endpunkt. Die n Kreisbögen gehen an ihren Anfangs- und Endpunkten tangential ineinander über, so dass sie gemeinsam eine stetig differenzierbare Profilkurve bilden.

Die Position eines jeden Kreisbogens j (j= 1 bis n) ist durch die Angabe von zwei verschiedenen Punkten eindeutig festlegbar. Zweckmäßigerweise wird die Position eines Kreisbogens durch Angabe des Mittelpunktes und des Anfangs- oder Endpunktes festgelegt. Die Größe eines einzelnen Kreisbogens j ist durch den Radius $r_j$ und den Winkel $a_j$ um den Mittelpunkt zwischen Anfangs¬ und Endpunkt festgelegt, wobei der Radius $r_j$ größer als 0 und kleiner als der Achsabstand a zwischen den Wellen ist und der Winkel $a_j$ im Bogenmaß größer oder gleich 0 und kleiner oder gleich 2p; ist, wobei p die Kreiszahl ist.

Die vorgenannten Schneckenelemente sind dadurch gekennzeichnet, dass

- das erzeugende Schneckenprofil und das erzeugte Schneckenprofil in einer Ebene liegen,

- die Drehachse des erzeugenden Schneckenprofils und die Drehachse des erzeugten Schneckenprofils in einem Abstand a (Achsabstand) jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,

- die Anzahl der Kreisbögen des gesamten erzeugenden Schneckenprofils n größer oder gleich vier (n>4) ist,

- der Außenradius ra des erzeugenden Schneckenprofils größer als Null (ra>0) und kleiner als der Achsabstand (ra<a) ist,

- der Kernradius ri des erzeugenden Schneckenprofils größer als Null (ri>0) und kleiner oder gleich ra (ri≤ra) ist,

- alle Kreisbögen des erzeugenden Schneckenprofils tangential ineinander übergehen,

- die Kreisbögen ein geschlossenes Schneckenprofil bilden, d.h. die Summe der Winkel $a_j$ aller Kreisbögen j gleich 2p; ist, wobei p die Kreiszahl ist,

- die Kreisbögen ein konvexes Schneckenprofil bilden,

- jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,

- mindestens einer der Kreisbögen des erzeugenden Schneckenprofils den Außenradius ra des erzeugenden Schneckenprofils in einem Punkt $P_A$ berührt,

- mindestens einer der Kreisbögen des erzeugenden Schneckenprofils den Kernradius ri des erzeugenden Schneckenprofils in einem Punkt $P_I$ berührt, die Anzahl der Kreisbögen n' des erzeugten Schneckenprofils gleich der Anzahl der Kreisbögen n des erzeugenden Schneckenprofils ist,

- der Außenradius ra' des erzeugten Schneckenprofils gleich der Differenz aus Achsabstand und Kernradius ri des erzeugenden Schneckenprofils ist (ra' = a-ri),

- der Kernradius ri' des erzeugten Schneckenprofils gleich der Differenz aus Achsabstand und Außenradius ra des erzeugenden Schneckenprofils ist (ri' = a-ra),

- der Winkel $a_j$' des j'-ten Kreisbogens des erzeugten Schneckenprofils gleich dem Winkel $a_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,

- die Summe von Radius r des j'-ten Kreisbogens des erzeugten Schneckenprofils und Radius j des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,

- der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schneckenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,

- ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

Die Schneckenelemente können unsymmetrisch oder symmetrisch sein, bevorzugt sind symmetrische Schneckenelemente. Symmetrische Schneckenelemente können achsensymmetrisch oder punktsymmetrisch sein; bevorzugt sind erfindungsgemäß achsensymmetrische Schneckenelemente.

Die Erzeugung solcher Querschnittsprofile ist detailliert in WO2009/152968 A und WO2009/153000 A beschrieben und dem Fachmann somit bekannt.

In einer anderen Ausführungsform der Erfindung werden erfindungsgemäß Schneckenelemente, deren Querschnittsprofile nachstehend auch Aussenkontur genannt werden und die das Merkmal S3) erfüllen eingesetzt mit

- einer Längsachse M*,

- einem jeweils die Längsachse M* als Mittelpunkt aufweisenden Kernradius Rj und einem Außenradius $R_a$,

- einer um die Längsachse M* verlaufenden Außenkontur A($\varphi$), wobei $\varphi$ der Winkel um die Längsachse M* ist und

- $R_i < D_A((p) < R_a$ für einen Abstand $D_A((p)$ der Außenkontur A($\varphi$) von der Längsachse M gilt, und die weiterhin dadurch gekennzeichnet sind, dass

  - die Außenkontur A($\varphi$) mindestens einen entlang eines Winkelabschnitts $\Delta\varphi$ verlaufenden Außenkontur-Abschnitt A($\Delta\varphi$) aufweist, der einen sich stetig ändernden Abstand $D_A(\Delta\varphi)$ von der Längsachse M* hat, wobei Rj $< D_A(\Delta\varphi) < R_a$ ist, und

  - der eine zugehörige Evolute E aufweist,

- die eine Menge von n Punkten P(i) mit i = 1 bis n und n $\geq$ 3 ist,

- wobei jeder der Punkte P(i) außerhalb der Längsachse M* und innerhalb des Außenradius $R_a$ liegt, und

- wobei jeweils zwei benachbarte Punkte P(i) und P(i+1) einen Abstand $\Delta r$(i) voneinander aufweisen, der kleiner als $R_i/2$ ist.

Vorzugsweise zeichnen sich die Schneckenelemente weiterhin dadurch aus, dass jeweils zwei benachbarte Punkte P(i) und P(i+1) einen Abstand $\Delta r$(i) voneinander aufweisen, der kleiner als $R_i/4$, insbesondere kleiner als $R_i /6$, und insbesondere kleiner als $R_i /8$ ist, wobei die jeweils zwei benachbarten Punkte P(i) und P(i+1) zu benachbarten Evolventenbögen E'(i) und E'(i+1) gehören.

In einer anderen Ausführungsform zeichnen sich die Schneckenelemente dadurch aus, dass jeweils zwei benachbarte Punkte P(i) und P(i+1) einen konstanten Abstand Dr voneinander aufweisen undgegebenenfalls weiterhin, dass die zu den Punkten P(i) gehörigen Evolventenbögen E'(i) jeweils einen Zentriwinkel $\Delta\varepsilon$(i) aufweisen, der kleiner als 60°, insbesondere kleiner als 45°, und insbesondere kleiner als 30° ist.

In einer weiteren Ausführungsform zeichnen sich die Schneckenelemente dadurch aus, dass die zu den Punkten P(i) gehörigen Evolventenbögen E'(i) konstante Zentriwinkel $\Delta\varepsilon$ aufweisen.

In einer weiteren Ausführungsform zeichnen sich die Schneckenelemente dadurch aus, dass die Punkte P(i) auf einer stetigen und differenzierbaren Kurve liegen, die eine gleichbleibende Krümmungsrichtung aufweist, wobei in einer weiteren Ausführungsform zeichnen die Evolute E zumindest abschnittsweise gleich der Kurve ist.

In einer weiteren Ausführungsform zeichnen sich die Schneckenelemente dadurch aus, dass der mindestens eine Außenkontur-Abschnitt A($\Delta\varphi$) über den gesamten Winkelabschnitt $\Delta\varphi$ gekrümmt ist.

In einer weiteren Ausführungsform zeichnen sich die Schneckenelemente dadurch aus, dass die Außenkontur

$A(\varphi)$ mindestens zwei Außenkontur-Abschnitte $A(A(\varphi_j))$ und $A(A(\varphi_{j+1}))$ aufweist und die mindestens zwei zugehörigen Evoluten $E_j$ und $E_{j+1}$ unterschiedlich sind.

In einer weiteren Ausführungsform zeichnen sich die Schneckenelemente dadurch aus, dass die Außenkontur $A(\varphi)$ eine einheitliche Krümmungsrichtung aufweist.

Vorzugsweise sind auch die vorgenannten Querschnittsprofile zweigängig oder dreigängig.

Die Erzeugung solcher Querschnittsprofile ist detailliert in WO2011/039016 A beschrieben und dem Fachmann somit prinzipiell bekannt.

Besonders bevorzugt werden vorgenannte Schneckenelemente in dichtkämmenden Mehrwellenextrudern wie insbesondere Doppelwellenextrudern, vorzugsweise gleichlaufenden Doppelwellenextrudern eingesetzt.

Das Merkmal S2) kann durch Einhalten gewisser Radialspiele bzw. Abstände zwischen den Gehäusebohrungen $B_n$ und den Schneckenelementen der in dieser Gehäusebohrung $B_n$ rotierenden $Welle_n$ in an sich bekannter Weise durch entsprechende Fertigung der Schneckenelemente erfüllt werden.

Die Radialspiele können, wie dem Fachmann bekannt ist, konstant oder, in den angegebenen Grenzen, variabel sein. Es ist auch möglich, innerhalb der Radialspiele ein Schneckenprofil zu verschieben. Dem Fachmann sind Methoden bekannt, um ausgehend von einem vorgegebenen, exakt abschabenden Schneckenprofil, ein Schneckenprofil mit erfindungsgemäßen Spielen abzuleiten. Bekannte Methoden hierfür sind beispielsweise die in [1] auf den Seiten 28 ff beschriebenen Möglichkeit der Achsabstand-Vergrößerung, der Längsschnitt-Äquidistanten und der Raumäquidistanten. Bei der Achsabstand-Vergrößerung wird ein Schneckenprofil mit kleinerem Durchmesser konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elements) um das halbe Spiel Schneckenelement-Schneckenelement senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt werden die Längsschnitt-Äquidistante und die Raumäquidistante, besonders bevorzugt die Raumäquidistante verwendet.

Die Erfüllung des Merkmals S1) ist eine schlichte Frage der Fertigung und dem Fachmann hinlänglich bekannt.

Bevorzugte Materialien aus denen Schneckenelemente generell bestehen sind Stähle, insbesondere Nitrierstähle, Chrom-, Werkzeug- und Edelstahle, sowie pulvermetallurgisch hergestellte metallische Verbundwerkstoffe auf Basis von Eisen, Nickel oder Kobalt. Weitere sind Nickel-Basislegierungen sowie nicht-metallische werkstoffe wie Keramiken.

Die erfindungsgemäße Entgasungsvorrichtung kann weiterhin auch dem Extruder vorgeschaltet einen Vorextruder oder einen Vorkneter umfassen, die jeweils als Entgasungsextruder bzw. Entgasungskneter ausgestaltet sind.

Solche Anordnungen sind prinzipiell aus EP 2 353 839 A oder PCT/EP2011/054415 bekannt.

In einer Ausführungsform der Entgasungsvorrichtung kann die den entgasenden Vorextruder oder entgasenden Vorkneter und den (Haupt-extruder verbindende Übergabezone zumindest ein, vorzugsweise genau ein Entspannungselement wie insbesondere die oben beschriebenen Düsenplatten aufweisen.

In einer weiteren Ausführungsform der Entgasungsvorrichtung kann die den entgasenden Vorextruder oder entgasenden Vorkneter und den (Haupt-)Extruder verbindende Übergabezone zumindest eine Druckregulierungseinheit wie beispielsweise eine Drossel enthalten, mit der dann der Energieeintrag in den Vorextruder oder Vorkneter gesteuert werden kann.

Durch diesen zweistufigen Aufbau der Entgasungsvorrichtung kann eine hohe Entgasungsleistung bei gleichzeitig hohem Durchsatz an polymerhaltigem Medium erzielt werden.

Sofern ein entgasender Vorextruder eingesetzt wird, wird dessen Drehzahl typischerweise hoch gewählt, da der Energieeintrag durch die (noch) niedrige Viskosität des zu entgasenden polymerhaltigen Mediums gering ist. Der Anteil an flüchtigen Verbindungen kann hierdurch vor der Zuführung in den (Haupt-)Extruder erheblich verringert werden.

Dem entgasenden Vorextruder oder entgasenden Vorkneter kann zur weiteren Erhöhung der Entgasungsleistung ein oder mehrere weitere Konzentratoreinheiten vorgeschaltet sein.

Solche Konzentratoreinheiten können beispielsweise Flash-Verdampfer bzw. Zyklone sein, die aus dem Stand der Technik hinlänglich bekannt sind .

In einer Ausführungsform umfasst eine Konzentrationseinheit zumindest

- eine Heizvorrichtung in Verbindung mit einem Entgasungstank, wobei das Bodenteil des Entgasungstanks mit einer Pumpe in Verbindung steht und das obere Teil des Entgasungstanks mit zumindest einer Gasableitung in Verbindung steht

- eine Heizeinheit in Verbindung mit der Pumpe der Konzentrationseinheit und der Zuführzone des Extruders oder des Vorextruders oder des Vorkneters

Im Zusammenhang mit dieser Erfindung enthält der Begriff "in Verbindung" direkte oder indirekte Verbindungen, wobei indirekte Verbindungen zum Beispiel über Schläuche oder Rohre ausgeführt werden können. Der Begriff "in Verbindung" enthält des Weiteren die Option, dass zwischen den Einheiten oder Mitteln, die in Verbindung stehen, weitere Einheiten oder Mittel angeordnet sind.

Entprechende Konzentratoreinheiten sind aus WO2010/031823 A hinlänglich bekannt.

Weitere Merkmale, Vorteile und Einzelheiten der Erfindung ergeben sich unten aus der Beschreibung der Ausführungsbeispiele.

Die erfindungsgemäße Entgasungsvorrichtung einschließlich ihrer vor- und nachstehend ausgeführten Ausgestaltungsformen ist insbesondere zur Anwendung in einem Verfahren zur Entgasung von polymerhaltigen Medien geeignet, weshalb ein weiterer Gegenstand der Erfindung ein Verfahren zum Entfernen flüchtiger Verbindungen aus einem polymerhaltigen Medium (PM) ist, das zumindest ein Polymer und zumindest eine flüchtige Verbindung enthält, das zumindest die folgenden Schritte umfasst:

a) Bereitstellen einer erfindungsgemäßen Entgasungsvorrichtung

b) Zuführen des polymerhaltigen Mediums (PM) in die Entgasungsvorrichtung wobei diese so betrieben wird, dass flüchtige Verbindungen aus dem polymerhaltigen Medium (PM) durch die Entgasungsöffnungen der Entgasungseinheit entweichen und so das polymerhaltigen Medium (PM) an flüchtigen Verbindungen verarmt, und bei Austrag aus der Entgasungsvorrichtung das Polymer aus dem polymerhaltigen Medium als Produkt P gewonnen wird, das dann eine geringeren Anteil an flüchtigen Verbindungen aufweist als das in die Entgasungsvorrichtung zugeführte polymerhaltige Medium (PM) und vorzugsweise eine Gesamtkonzentration von flüchtigen Verbindungen von weniger als 1 Gew.-%, vorzugsweise weniger als 0,5 Gew.-% basierend auf der Masse des Polymers aufweist.

Das polymerhaltige Medium PM, das insbesondere bei Lösungen von Elastomeren in organischen Lösungsmitteln auch als Zement bezeichnet wird, enthält beispielsweise 3 bis 98 Gew.-% eines Polymers und 2 bis 97 Gew.-% flüchtige Verbindungen, insbesondere ein organisches Lösungsmittel oder ein organisches Lösemittel und Wasser, wobei die oben genannten Komponenten bis zu 90 bis 100 Gew.-%, vorzugsweise 95 bis 100 Gew.-% der Gesamtmasse des polymerhaltigen Mediums ausmachen.

Das organische Lösungsmittel kann beispielsweise ausgewählt sein aus der Gruppe bestehend aus linearen oder verzweigten Alkanen mit 4 bis 10 C-Atomen, vorzugsweise 4 bis 7 C-Atomen. Bevorzugtere Lösungsmittel sind Lösungsmittel enthaltend oder bestehend aus n-Pentan, iso-Pentan, n-Hexan, cyclo-Hexan, iso-Hexan, Methyl-cyclopentan, Methylcyclohexan und n-Heptan wie auch beliebige Gemische, die diese Alkane umfassen oder aus diesen bestehen.

In einer Ausführungsform enthält das in den Extruder eingespeiste polymerhaltige Medium PM, beispielsweise 30 bis 98 Gew.-% eines Polymers und 2 bis 70 Gew.-% flüchtige Verbindungen, insbesondere organische Lösungsmittel oder organische Lösungsmittel und Wasser , wobei die oben genannten Komponenten zusammen 90 bis 100 Gew.-%, vorzugsweise 95 bis 100 Gew.-% der Gesamtmasse des polymerhaltigen Mediums ausmachen.

Das in den Extruder eingespeiste polymerhaltige Medium PM enthält bevorzugt 40 bis 95 Gew.-% eines Polymers und 5 bis 60 Gew.-% flüchtige Verbindungen, insbesondere organische Lösungsmittel oder organische Lösungsmittel und Wasser, wobei die oben genannten Komponenten zusammen 90 bis 100, vorzugsweise 95 bis 100 Gew.-% der Gesamtmasse des polymerhaltigen Mediums ausmachen.

Sofern die Entgasungseinheit ein dem Extruder vorgeschalteten entgasenden Vorextruder, einen entgasenden Vorkneter oder eine Konzentratoreinheit umfasst, enthält das in den entgasenden Vorextruder, den entgasenden Vorkneter oder die Konzentratoreinheit eingespeiste polymerhaltige Medium PM beispielsweise 10 bis 95 Gew.-% eines Polymers und 5 bis 90 Gew.-% flüchtige Verbindungen, bevorzugt 15 bis 80 Gew.-% eines Polymers und 20 bis 85 Gew.-% flüchtige Verbindungen, und besonders bevorzugt 15 bis 70 Gew.-% eines Polymers und 30 bis 85 Gew.-% flüchtige Verbindungen, wobei die flüchtigen Verbindungen insbesondere organische Lösungsmittel oder organische Lösungsmittel und Wasser sind, wobei die oben genannten Komponenten zusammen 90 bis 100, vorzugsweise 95 bis 100 Gew.-% der Gesamtmasse des polymerhaltigen Mediums ausmachen.

Es ist dem Fachmann klar, dass der Gehalt des polymeren Mediums PM an flüchtigen Verbindungen bei Eintritt in den entgasenden Vorextruder oder den entgasenden Vorkneter geringer ist als bei Eintritt in den nachgeschalteten Extruder. Gleiches gilt analog für den Gehalt des polymeren Mediums PM an flüchtigen Verbindungen bei Eintritt in eine Konzentratoreinheit die einem entgasenden Vorextruder oder einem entgasenden Vorkneter vorgeschaltet ist.

In diesem Fall enthält das in die Konzentratoreinheit eingespeiste polymerhaltige Medium PM vorzugsweise 5 bis 80 Gew.-% eines Polymers und 20 bis 95 Gew.-% flüchtige Verbindungen, bevorzugt 10 bis 75 Gew.-% eines Polymers und 25 bis 90 Gew.-% flüchtige Verbindungen, wobei die flüchtigen Verbindungen insbesondere organische Lösungsmittel oder organische Lösungsmittel und Wasser sind, wobei die oben genannten Komponenten zusammen 90 bis 100, vorzugsweise 95 bis 100 Gew.-% der Gesamtmasse des polymerhaltigen Mediums ausmachen.

In einer Ausführungsform der Erfindung können die Extruder über die Gehäuse entweder auf Temperaturen bis zu 300°C erwärmt oder alternativ dazu gekühlt werden.

In einer bevorzugten Ausführungsform umfasst der Extruder Mittel zum Betreiben getrennter Zonen unabhängig voneinander bei unterschiedlichen Temperaturen, so dass die Zonen entweder erwärmt, nicht erwärmt oder gekühlt werden können.

Bevorzugte Extrudermaterialien sollten nicht korrosiv sein und sollten im Wesentlichen eine Verunreinigung des polymerhaltigen Mediums des Produkts P mit Metall oder Metallionen verhindern.

Bevorzugte Extrudermaterialien enthalten Nitrierstahl, Duplexstahl, rostfreien Stahl, Legierungen auf Nickelbasis, Verbundmaterialien wie gesinterte Metalle, heiße isostatische gepresste Materialien, harte abriebbeständige Materialien wie Stellite, mit Beschichtungen beschichtete Metalle, die zum Beispiel aus Keramik, Titannitrid, Chromnitrid und diamantähnlichem Kohlenstoff (DLC) bestehen.

Die Gasableitungen der Entgasungszonen können an ein Kondensiersystem angeschlossen sein und sind dies vorzugsweise auch.

Im Allgemeinen ist der Zweck des Kondensiersystems das Sammeln flüchtiger Verbindungen, die von den Entgasungsöffnungen über die Gasableitungen entfernt wurden, und es umfasst für gewöhnlich einen Kondensator und eine Vakuumpumpe. Jedes Kondensiersystem, das nach dem Stand der Technik bekannt ist, kann zur Durchführung der Wiedergewinnung von flüchtigen Verbindungen verwendet werden.

Im Allgemeinen ist bevorzugt, die kondensierten flüchtigen Verbindungen, gegebenenfalls nach Durchführung einer Phasentrennung zur Trennung der flüchtigen organischen Verbindungen von Wasser, in einen Prozess für die Zubereitung von polymerhaltigen Medien zurückzuleiten.

Der Entgasungsvorrichtung nachgeschaltet können Produktverarbeitungsvorrichtungen sein, die vorzugsweise kühlend arbeiten.

Kühlend arbeitende Produktverarbeitungsvorrichtungen umfassen alle dem Fachmann für diese Zweck geläufigen wie beispielsweise pneumatische Krümelförderer mit konvektiver Luftkühlung, vibrierende Krümelförderer mit konvektiver Luftkühlung, vibrierende Krümelförderer mit gekühlten Kontaktflächen, Bandförderer mit konvektiver Luftkühlung, Bandförderer mit gekühlten Bändern, Wassersprühvorrichtungen und Unterwasser-Pelletierer in denen das Wasser als Kühlmittel fungiert.

Das Produkt P kann dann zur Endverpackung und für den Versand weiter verarbeitet werden. (Halo)Butylkautschuk wird zum Beispiel auf eine Temperatur von oder unter 60°C gekühlt, z.B. mit einer hydraulischen Presse zu Bündeln geformt und dann in Schachteln oder Kisten für den Versand verpackt.

Im Allgemeinen erfordert eine erhöhte Beschickungsrate des polymerhaltigen Mediums PM in die Zuführzone des Extruders eine entsprechende Erhöhung der Drehzahl des Extruders. Ferner bestimmt die Drehzahl die Verweilzeit des polymerhaltigen Mediums PM. Somit sind Drehzahl, Beschickungsrate und der Extruderdurchmesser für gewöhnlich voneinander abhängig. Für gewöhnlich wird der Extruder derart betrieben, dass der dimensionslose Durchsatz $V/n \cdot d^3$ auf etwa 0,01 bis etwa 0,2, vorzugsweise auf etwa 0,015 bis etwa 0,1 eingestellt ist, wobei V die Volumenströmungsrate, n die Drehzahl, ausgedrückt in Umdrehungen pro Minute und d den effektiven Durchmesser des Extruders bezeichnet. Die maximalen und minimalen Beschickungsraten und Drehzahlen werden zum Beispiel durch die Größe des Extruders, die physikalischen Eigenschaften des Polymers, das im polymerhaltigen Mediums PM enthalten ist, und den Zielwerte der im Polymer verbleibenden flüchtigen Verbindungen bestimmt. Anhand dieser Eigenschaften können jedoch die Betriebsparameter von einem Fachmann mit Hilfe einiger anfänglicher Experimente bestimmt werden.

In einer Ausführungsform der Erfindung wird der Extruder bei einer Beschickungsrate von 5 bis 25.000, vorzugsweise 5 bis 6.000 Kilogramm pro Stunde betrieben.

Im Allgemeinen kann die Entgasung im Extruder aber auch im Vorextruder oder Vorkneter durch die Zugabe eines Strippmittels unterstützt werden, das gemeinsam mit anderen flüchtigen Verbindungen entfernt wird. Auch wenn das Strippmittels grundsätzlich überall in der Extrudereinheit zugegeben werden kann, ist die Zugabe ausserhalb der Entgasungszonen, z.B. in einer oder mehreren Druckaufbauzonen oder Dispergierzonen bevorzugt.

Geeignete Strippmittel sind Substanzen, die gegenüber dem polymerhaltigen Medium (PM) inert sind und einen Dampfdruck von mehr als 100 hPa bei 100°C aufweisen.

Im Zusammenhang mit der Erfindung bedeutet der Begriff "inert", dass das Strippmittel mit den Polymeren nicht oder nicht erkennbar chemisch reagiert. Geeignete Strippmittel sind Stickstoff, Kohlendioxid, Edelgase, Propan, Butan, Wasser oder ein Gemisch der oben genannten Substanzen. Die Menge des Strippmittel kann 0,0001 bis 10, vorzugsweise 0,001 bis 5 und bevorzugter 0,1 bis 2 Gew.-% sein, basierend auf der Menge des Polymers, das an der Austragszone des Extruders erhalten wird.

Die Erfindung wird nachstehend anhand der Figuren beispielhaft näher erläutert ohne sie jedoch auf diese zu beschränken.

Fig. 1 zeigt ein übliches zweigängiges Erdmenger-Schneckenprofil mit den geometrischen Prüfkriterien wie eingangs detailliert beschrieben

Fig. 2a, 2b, 2c und 2d zeigen stetig integrierbare Schneckenprofile die zumindest das Merkmal S3) erfüllen

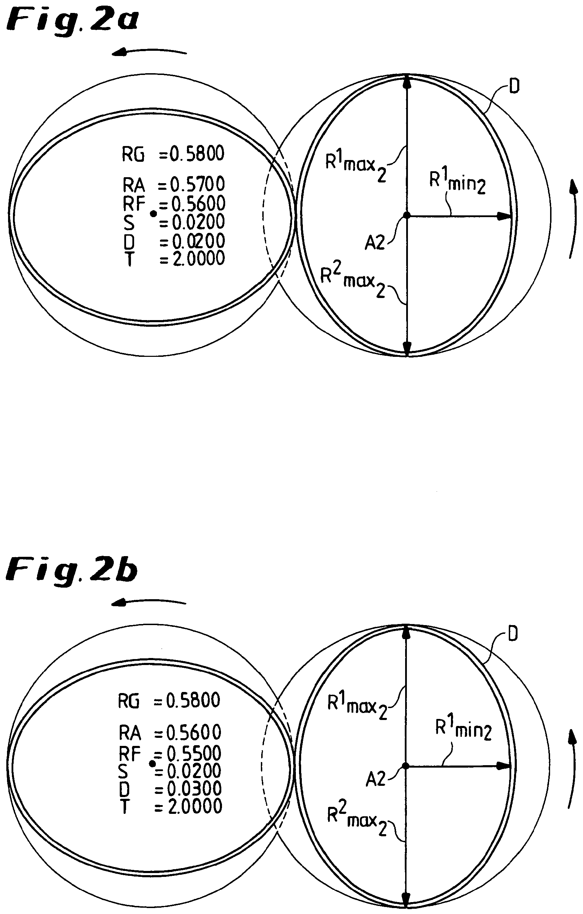

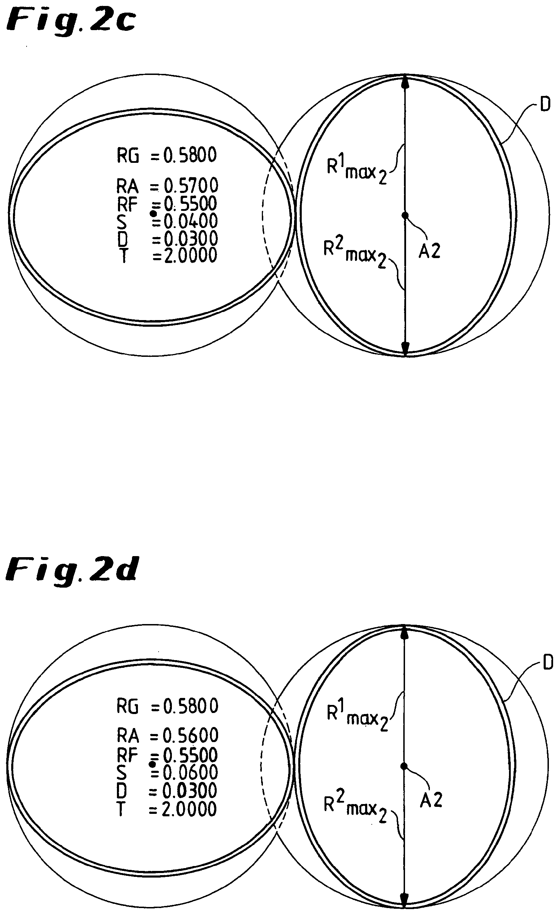

Für die Fig. 2a, 2b, 2c und 2d gelten folgende Konventionen: Die Koordinaten x und y haben ihren Ursprung im Drehpunkt einer der Wellen. Alle Winkelangaben erfolgen im Bogenmaß. Alle übrigen Maßanga¬ ben sind auf den Achsabstand normiert und werden durch Großbuchstaben dargestellt: A = a/a; Rj = r/a; RA = ra/a; usw.

Weiterhin bedeuten:

RG = normierter Gehäuseradius,
RA = normierter Außenradius des Profils,
RF = normierter Außenradius der zu fertigenden Schnecke,
S = normiertes Spiel der Schnecken untereinander (Spalt),
D = normiertes Spiel der Schnecke zum Gehäuse

Die Fig. 2a, 2b, 2c und 2d zeigen Beispiele von Profilen erfindungsgemäß verwendeter Schneckenelemente mit Spielen, die erfindungsgemäß sind . In Fig. 2a wurde der Spalt S bei der Abreinigung der Schnecken untereinander gleich groß gewählt wie der Spalt D bei der Abreinigung des Gehäuses. In Fig. 2b ist der Spalt S kleiner als D und in Fig. 2c und 2d ist umgekehrt D kleiner als S.

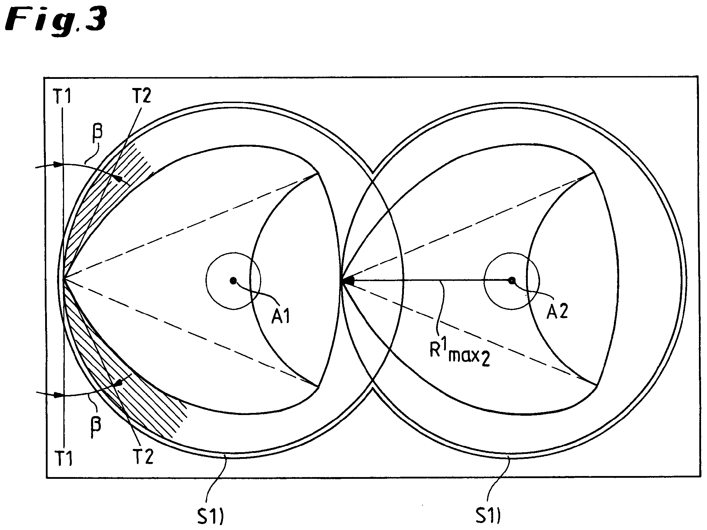

Fig. 3 stellt ein Schneckenelement dar, das das Merkmal S3) und S1) erfüllt.

Die Konstruktion des Profils als solchem ist in WO2011/039016 insbesondere in Fig. 26 und der dazugehörigen Beschreibung offenbart. Allerdings wurden die radialen Maxima $R^1_{max}$, $R^2_{max}$ und $R^3_{max}$ im Bezug auf den Durchmesser der Gehäusebohrungen D1 und D2 so reduziert, dass sich die Radialspiele des Merkmals S1) ergeben. Der Radius $R_{max}$ beträgt hier 0,96 des Gehäusedurchmessers.

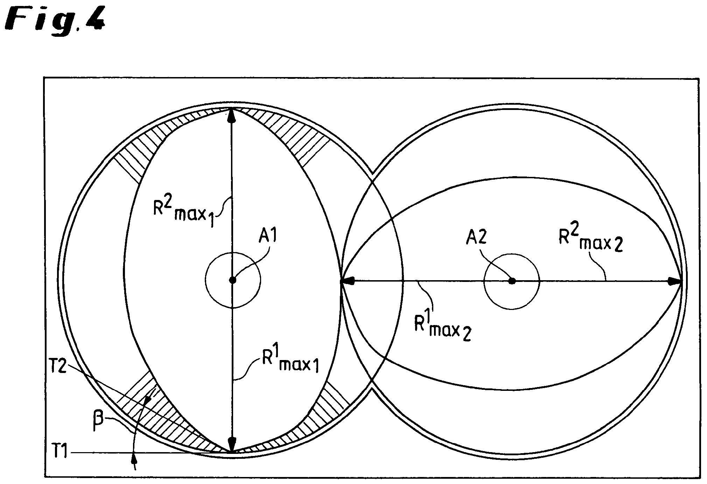

Fig. 4 stellt ein Schneckenelement dar, das die Merkmale S3) und S1) erfüllt.

Die Konstruktion des zweigängigen Profils als solchem ist ebenfalls in WO2011/039016 insbesondere in Fig. 22 und der dazugehörigen Beschreibung offenbart. Allerdings wurden die radialen Maxima $R^1_{max}$ und $R^2_{max}$ im Bezug auf den Durchmesser der Gehäusebohrungen D1 und D2 so reduziert, dass sich die Radialspiele des Merkmals S1) ergeben. Der Radius $R_{max}$ beträgt hier 0,96 des Gehäusedurchmessers

Sowohl in Fig. 3 als auch in Fig. 4 ist das eine Kante ausbildende relative Maximum, das gleichzeitig jeweils ein absolutes Maximum darstellt zu einem punktförmigen relativen Maximum entartet, so dass sich der für diese Punkte ergebenenden Tangentenwinkel b ausser Betracht bleiben, da die Punkte definitionsgemäß nicht der aktiven Flanke $F_{akt}$ zugeordnet werden.

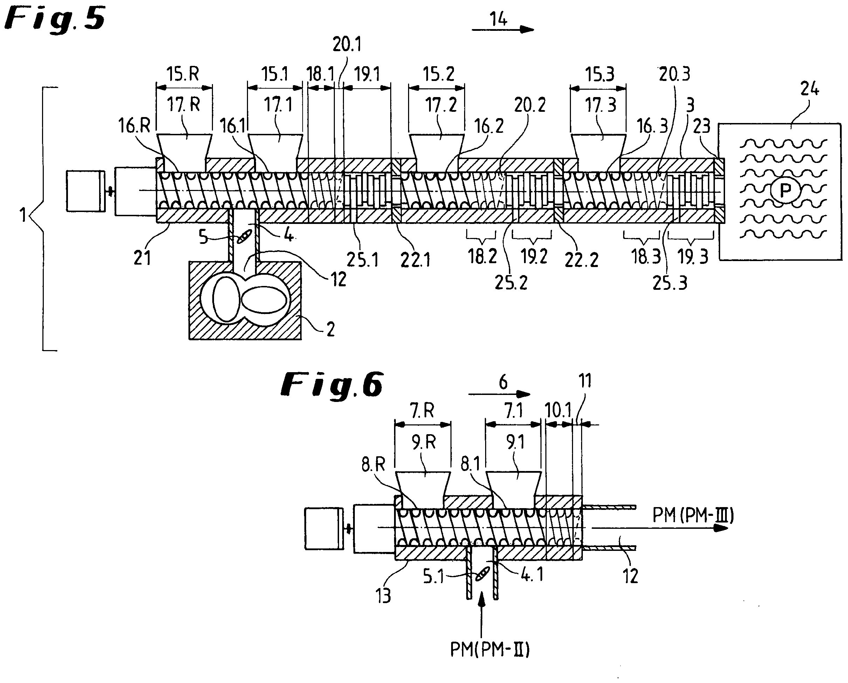

Fig 5 stellt den Extruder einer erfindungsgemäßen Entgasungsvorrichtung im Längsschnitt und den vorgeschalteten Vorextruder im Querschnitt dar.

Fig. 6 zeigt den dem Extruder vorgeschalteten Vorextruder im Längsschnitt

Die nachstehenden Ausführungsbeispiele werden anhand der Figuren 5 und 6 erläutert.

**Beispiele**

**Analytische Verfahren**

Wassergehalt von polymerhaltigen Medien PM: Die Probe wurde in eine Zentrifuge eingebracht und 5 min bei 4000 U/min bei Raumtemperatur geschleudert. Das Wasser wurde dann am Boden der Ampulle gesammelt und gewogen.

Gesamtkonzentration flüchtiger Verbindungen: Eine Probe des Produktes (P) wurde in kleine Stücke mit einer Größe von 2x2 mm geschnitten. Ungefähr 30 g des Produktes wurde in einen Aluminiumtopf eingebracht. Das Gewicht des Topfes und des Produktes wurde exakt bestimmt. Der Topf mit der Probe des Produktes wurde dann in einen Vakuumofen bei einem Vakuumpegel von 130 hPa für 60 min bei einer Temperatur von 105°C gestellt. Nach dem Trocknen wurde der Topf in einen Exsikkator gestellt und 30 min abkühlen gelassen. Der Topf wurde dann wieder gewogen. Es wurde der Gewichtsverlust bestimmt.

Restlösungsmittelgehalt in Produkt P: Der Restlösungsmittelgehalt im Produkt P wurde durch Dampfraum-Gaschromatographie bestimmt. Eine Einwaage (0,5 ± 0,005 g) der Probe wurde in eine Dampfraumampulle eingebracht und eine gemessene Menge Lösemittel (1,2 Dichlorbenzol, ODCB) zugegeben. Die Ampulle wurde verschlossen und geschüttelt, bis das Produkt aufgelöst war. Die Ampulle wurde erwärmt, bis die flüchtigen organischen Verbindungen bei einem Gleichgewicht zwischen der Probe und der Gasphase in der Ampulle (Dampfraum) verteilt waren. Eine Teilmenge des Dampfraumgases wurde in einen Strom Trägergas eingespritzt, der die Probe entlang einer chromato-graphischen Säule beförderte. Standards bekannter Zusammensetzung wurden zum Kalibrieren der GC verwendet. Toluol wurde dem Lösemittel zur Verwendung als interner Standard zugegeben.

Restwassergehalt in Produkt P: Die Gesamtmenge an flüchtigen Verbindungen ist die Summe von Wasser, Lösungsmitteln und sonstigen flüchtigen Verbindungen. Da der Anteil von sonstigen flüchtigen Verbindungen wie Monomeren in den untersuchten Fällen üblicherweise geringer als 0,0005 Gew.-%, war, konnte der Restwassergehalt durch Subtrahieren des Lösungsmittelgehaltes vom Gesamtgehalt an flüchtigen Verbindungen bestimmt werden.

Der Lösungsmittelgehalt in den polymerhaltigen Medien PM wurde mittels Gaschromatographie gemessen. Der interne Standard war Isooctan. Die Probe wurde mit Toluol verdünnt und dann in den Gaschromatographen eingespritzt. Die Gaschromatographie wurde auf einem HP 6890 Chromatographen mit folgenden Spezifikationen durchgeführt:

- Säulenart DB-5 von J&W, Länge 60 m, Durchmesser 0,23 mm, Filmdicke 1,0 $\mu$m
- Injektortemp.: 250°C
- Detektortemp.: 350°C
- Trägergas: Helium
- Säulendruck: 96kPa
- Detektor: FID

Für die nachstehenden Beispiele wurden folgende polymerhaltige Medien PM eingesetzt:

**Zubereitung von PM-I**

Eine rohe Brombutylkautschuklösung wurde von einer kommerziellen Produktionsanlage erhalten, und die organische Phase wurde vom wässerigen Phasenvolumen abgetrennt. Die Trennung der wässrigen von der organischen Phase ist aus WO2010/031823 A, insbesondere Fig. 7 und der Beschreibung dazu bekannt. Die organische Phase wurde dann zur Durchführung der Experimente als PM-I verwendet. PM-I enthielt etwa 23 Gew.-% Brombutylkautschuk, etwa 74 Gew.-% Hexanisomere und 3 Gew.-% Wasser, berechnet auf 100 Gew.-% dieser drei Komponenten. (Die Konzentration der Zusatzstoffe in Bezug auf die Brombutylkautschukfraktion betrug:

ESBO: 1 bis 1,6 phr, Kalziumstearat: 1,3 bis 1,7 phr und Irganox: 0,03 bis 0,1 phr

Der Brombutylkautschuks gewonnen aus PM-I, wies nach der Extrusion folgende Eigenschaften auf: Mooney (ML 1+8, 125°C) 28 bis 36, gebundener Bromgehalt 1,6 bis 2,0 Gew.-%.

**Beispiel 1: Vorkonzentration**

**Die Konzentratoreinheit**

Die Konzentratoreinheit, die für die Beispiele verwendet wurde, war ähnlich jener, die in WO2010/031823 A, insbesondere Fig. 1 dargestellt ist. Eine Zahnrdadpumpe wurde zum Pumpen des polymerhaltigen Mediums PM-I, das wie oben beschrieben zubereitet wurde, zur Heizvorrichtung verwendet. Die Heizvorrichtung war ein Wärmetauscher vom Typ Rohr-im-Rohr. Mehrere mit von innen mit Dampf beheizbare Rohre sind dabei in einem Hüllrohr untergebracht, das gleichzeitig das Produkt aufnimmt. Auf der produktberührten Aussenseite der inneren Rohre sind zudem Mischelemente untergebracht, die für einen guten Wärmeübergang sorgen. Das Heizmedium war Dampf, dessen Durchflussmenge je nach eingestellter Temperatur des Mediums geregelt werden konnte. Ein Druckentlastungsventil wurde vor der Konzentratoreinheit installiert, der Druck stromaufwärts des Ventils wurde automatisch auf einen Sollwert gesteuert. Dieser Sollwert wurde so gewählt, dass ein Kochen des erwärmten polymerhaltigen Medium PM-I in der Heizvorrichtung verhindert wurde. Das erwärmte polymerhaltige Medium PM-I wurde von oben in den Entgasungstank geleitet. Der konische Auslass des Entgasungsstanks (war mit einer Zahnradpumpe ausgestattet. Die Zahnradpumpe hatte den Vorteil, dass sie imstande war, hohe Viskositäten zu handhaben und hohe Drücke aufzubauen. Proben wurden vom konzentrierten polymerhaltigen Medium PM-II genommen, um die Konzentration nach der Konzentrationsstufe zu untersuchen.

**Beispiel 1**

Das Heizmedium der Heizvorrichtung wurde auf 160°C eingestellt, so dass das polymerhaltige Medium PM-I auf eine Temperatur von 135°C aufgewärmt wurde. Der Druck im Entgasungstank war atmosphärisch. Ein atmosphärischer Druck bedeutet, dass die verdampften flüchtigen Bestandteile aus dem Entgasungstank über einen Kondensator geleitet wurden. Der Kondensator wurde mit Wasser gekühlt, die kondensierten flüssigen Bestandteile liefen in ein Auffanggefäß, das direkt mit der Umgebung verbunden war. Dadurch stellte sich im Entgasungstank nahezu Umgebungsdruck ein.. Das konzentrierte polymerhaltige Medium PM-II am Auslass des Entgasungstanks konnte aus der Konzentratoreinheit mit Hilfe der Extraktionspumpe wie oben beschrieben gefördert werden. Das konzentrierte polymerhaltige Medium PM-II hatte eine Hexankonzentration von etwa 43 Gew.-%.

**Die Entgasungsvorrichtung (1)**

Das vorkonzentrierte PM-II wurde über eine Heizvorrichtung in die Entgasungsvorrichtung (1) geleitet. Die Heizvorrichtung war ein Wärmetauscher von derselben Bauart wie sie auch in der Konzentratoreinheit verwendet wurde. Die Entgasungsvorrichtung bestand aus einem Vorextruder (2), einem gegensinnig drehangetriebenen Doppelschneckenextruder mit einem Bohrungsdurchmesser von $D1 = D2 = 57$ mm und einer effektiven Länge von 720 mm und einem Hauptextruder (3), einem gleichsinnig drehangetriebenen Doppelschneckenextruder mit einem Bohrungsdurchmesser von $D1 = D2 = 58,3$ mm und einer effektiven Länge von 3225 mm. Effektive Länge bedeutet in diesem Fall die Länge auf der Produktberührung stattfindet.

Beide Extruder der Entgasungsvorrichtung umfassten ein Regelventil (5 bzw. 5.1) als eine Drucksteuerungsvorrichtung stromaufwärts der jeweiligen Zuführzonen (4 und 4.1) des Extruders bzw. des Vorextruders.

Der Vorextruder wies eine der Zuführzone (4.1) in Förderrichtung des Vorxtruders (6) nachgeordnete Entgasungszone (7.1), und eine der Zuführzone (4.1) in Förderrichtung des Vorextruders (6) vorgeordnete Entgasungszone (7.R) auf. Die Entgasungszone (7.R) wies eine Entgasungsöffnung (8.R) mit Entgasungsdom (9.R) auf, die an eine Gasableitung angeschlossen war, die Entgasungszone (7.1) eine Entgasungsöffnung (8.1)mit Entgasungsdom (9.1), die an eine Gasableitung angeschlossen war. Der Entgasungszone (7.1) in Förderrichtung des Vorxtruders (6) nachgeordnet befand sich eine Druckaufbauzone (10.1) und ein Stauelement (11). Nach dem Stauelement (11) führte eine Übergabezone (12) zum Hauptextruder (3). Die Übergabezone (12) bestand aus einem beheizbaren Rohr, das in den Einlass des Regelventils (5) mündete, das wiederum den Beginn der zuführzone (4) des Hauptextruders (3) markierte.

Die Gasableitungen des Vorextruders (2) waren mit einer Absaug- und Kondensatoreinheit verbunden. Die Absaugung der Gase erfolgte mit einer Vakuumpumpe, von wo aus die verdichteten Gase in einen wassergekühlten Kondensator geleitet wurden. Das Gehäuse (13) des Vorextruders war mit Dampf variabel beheizbar ausgestaltet.

Der Hauptextruder wies drei der Zuführzone (4) in Förderrichtung des Extruders (14) nachgeordnete Entgasungszonen (15.1, 15.2 und 15.3), und eine der Zuführzone (4) in Förderrichtung des Extruders (14) vorgeordnete Entgasungszone (15.R) auf. Die Entgasungszone (15.R) wies eine Entgasungsöffnung (16.R) mit Entgasungsdom (17.R) auf, die an eine Gasableitung angeschlossen war, die Entgasungszonen (15.1, 15.2 und 15.3) jeweils eine Entgasungsöffnung (16.1, 16.2 und 16.3) mit Entgasungsdom (17.1, 17.2 und 17.3), die an jeweils eine Gasableitung angeschlossen war. Die Gasableitungen waren mit einer Kondensatoreinheit bestehend aus einer mechanischen Vakuumpumpe und einem nachgeschalteten wassergekühlten Kondensator angeschlossen. Die Gasableitungen waren mit einer Kondensatoreinheit bestehend aus zwei hintereinander geschalteten mechanischen Vakuumpumpen und einem nachgeschalteten wassergekühlten Kondensator angeschlossen.

Der Entgasungszone (15.1) in Förderrichtung des Extruders (14) nachgeordnet war eine Druckaufbauzone (18.1), und dieser wiederum nachgeordnet eine erste Dispergierzone (19.1).

Den Entgasungszonen (15.2 und 15.3) in Förderrichtung des Extruders (14) nachgeordnet befand sich ebenfalls jeweils eine Druckaufbauzone (18.2 und 18.3). Den Druckaufbauzonen (18.2 und 18.3) wiederum nachgeordnet war jeweils eine Dispersionszone (19.2 und 19.3). Zwischen den Druckaufbauzonen (18.1, 18.2 und 18.3), und den Dispersionszonen (19.1, 19.2 und 19.3), befand sich jeweils ein Stauelement (20.1, 20.2 und 20.3) sowie in Förderrichtung des Extruders (14) den Dispersionszonen (19.1 und 19.2) nachgeordnet jeweils ein im Gehäuse (21) herausnehmbar befestigtes geteiltes Seiherscheibenpaar (22.1 und 22.2).

Der letzten Druckaufbauzone (18.3) in Strömungsrichtung des Extruders (14) nachgeordnet befand sich der Austragszone (23) aus dem Extruder. Dieser Austrag wurde gebildet durch eine feste Düsenplatte, die in eine Unterwassergranulierung (24) mündet. Zwischen der Druckaufbauzone des Extruders (18.3) und der Düsenplatte des Granulators (23) befand sich ein Anfahrventil, das es erlaubt, anstelle der Förderung des Produktes durch die Düsenplatte zum Unterwassergranulator, über einen Bypass das Produkt in ein bereitgestelltes Auffanggefäß zu extrudieren. Dieser Bypass wird vor allem zum An- und Abfahren der Extrusionsvorrichtung verwendet.

Im Bereich der Disperionszonen (19.1, 19.2 und 19.3) wies der Extruder Einlassöffnungen (25.1, 25.2 und 25.3) für die Zuführung von Strippmitteln auf.

Das Gehäuse war mehrteilig und so ausgestaltet, dass es in drei unabhängig voneinander erwärmte oder gekühlte Zonen eingeteilt werden konnte, um das Temperaturprofil im Extruder zumindest teilweise zu steuern. Heizung und Kühlung erfolgte mit Dampf bzw. Kühlwasser.

Die für die Entgasungs-, Druckaufbau- und Dispersionszonen eingesetzten Behandlungselemente und ihre Spezifikation sind in den nachfolgenden Beispielen angegeben.

**Beispiel 2**

Das aus Beispiel 1 erhaltene vorkonzentrierte polymerhaltige Medium PM-II wurde über eine Heizvorrichtung in die Entgasungsvorrichtung mit einer Rate von 180 kg/h geleitet, resultierend in ca. 80kg/h entgastem trockenem Produkt an der Austragszone (24) der Entgasungsvorrichtung. Die Dampfzufuhr zur Heizvorrichtung wurde dabei so eingestellt, dass die Temperatur von PM-II am Regelventil (5.1) ca. 110°C betrug. Der Druck am Regelventil wurde auf 1,3MPa eingestellt. Der Druck in beiden Zonen des Vorextruders wurde auf 400mbar absolut eingestellt. Die Heiztemperatur in den beheizbaren Teilen des Gehäuses (13) des Vorextruders betrug ca. 160°C. Am Beginn der Übergabezone (4) betrug der Kautschukanteil des weiter aufkonzentrierten polymerhaltigen Mediums PM-III etwa 80 Gew.-%. PM-III wurde dann bei einer Temperatur von 100°C und einem Druck von ca. 2,0 MPa in den Hauptextruder (3) in der Zuführzone (4) eingeführt. Der Druck an der Übergabezone ergab sich bei komplett geöffneter Drucksteuerungsvorrichtung an der Zuführzone des Hauptextruders.

**Beispiele 3 bis 6**

Das nach Beispiel 1 und Beispiel 2 erhaltene und weiter aufkonzentrierte Produkt PM-III wurde in den Hautpextruder (3) eingeleitet, wobei unterschiedliche Schneckenelemente in den Entgasungs- und Dispergierzonen zum Einsatz kamen..

Die Entgasungszone (15.R) sowie in der Entgasungszone (15.1), wurden bei einem Druck von absolut ca. 100-180 mbar betrieben. Der Druck in den Entgasungszonen (15.2 und 15.3) wurden auf absolut etwa 50 mbar eingestellt. Technisch gesehen ist es schwierig, einen Vakuumdruck in einem solchen Prozess exakt konstant zu halten, daher ergeben sich Schwankungen, die sich im Versuchslauf ausgleichen.

In die Dispergierzone (19.1) die der Entgasungszone (15.1) nachgeordnet ist wurde Stickstoff als Strippmittel mit einer Rate von 0,5 bis 0,6 kg/h eingeleitet.

In die Dispergierzone (19.2) die der Entgasungszone (15.2) nachgeordnet ist wurde eine Dispersion aus Wasser mit Kalziumstearat (45 Gew.% Kalziumstearat) mit einer Rate von 3,6 kg/h eingeleitet.

In die Dispergierzone (19.3) die der Entgasungszone (15.3) nachgeordnet ist wurde eine Dispersion aus Wasser mit Kalziumstearat (45 Gew.-% Kalziumstearat) mit einer Rate von 3,6 kg/h eingeleitet.

Die Drehzahl der Extruderwellen des Hauptextruders betrug zwischen 60 $min^{-1}$ und 90$min^{-1}$.

In Tabelle 2a) sind die in den jeweiligen Beispielen eingesetzten Schneckenelemente zusammengefasst.

**Tabelle 2a) eingesetzte Schneckenelemente**

| Beispiel | Entgasungszonen 15.1, 15.2 und 15.3 | Dispersionszonen 19.1, 19.2 und 19.3 |
|---|---|---|
| 3 | zweigängiges Standard Erdmenger-Profil analog zu Fig. 1 | Knetblöcke & Exzenterscheiben |
| 4 | zweigängiges Standard Erdmenger-Profil analog zu gemäß Fig. 1 | Knetblöcke & Exzenterscheiben |
| 5 | zweigängiges Schneckenelement mit stetig differenzierbarem Profil analog zu Fig. 2b | zweigängiges Schneckenelement mit stetig differenzierbarem Profil analog zu Fig. 2b |
| 6 | zweigängiges Standard Erdmenger-Profil analog zu Fig. 1 | zweigängiges Standard Erdmenger-Profil analog zu Fig. 1 |

**Tabelle 2b) Steigungshöhe t und Spaltmasse**

| Beispiel | Entgasungszonen 15.1, 15.2 und 15.3 |
|---|---|
| 3 | $R^1_{max\,n} = R^2_{max\,n} = 0{,}496\,D_n$, t =1,37 $D_n$ |
| 4 | $R^1_{max\,n} = R^2_{max\,n} = 0{,}474D_n$, t =1,37 $D_n$ |
| 5 | $R^1_{max\,n} = R^2_{max\,n} = 0{,}479D_n$, t =2,06 $D_n$ |
| 6 | $R^1_{max\,n} = R^2_{max}\,n = 0{,}474\,Dn$, t = 2,06 $D_n$ |

**Tabelle 2c) Ergebnisse**

| Beispiel | Hexan-Gehalt im Produkt P [Gew.-ppm] | Gesamte flüchtige Stoffe incl. Wasser [Gew.-%] |
|---|---|---|
| 3 (zum Vergleich) | 2900 | <0,30 |
| 4 (zum Vergleich) | 3000 | <0,30 |
| 5 | 450 | <0,30 |
| 6 | 500 | <0,30 |

Aus den Beispielen wird Folgendes ersichtlich:

In Beispiel 3 ist keine Bedingung S1), S2) oder S3 erfüllt, das Entgasungsergebnis ist unbefriedigend.

In Beispiel 4 ist nur die Bedingung S1) erfüllt, das Entgasungsergebnis ist unbefriedigend.

In Beispiel 5 sind alle Bedingungen S1), S2) und S3) erfüllt, das Entgasungsergebnis ist sehr gut.

In Beispiel 6 sind die Bedingungen S1) und S2) erfüllt, das Entgasungsergebnis ist ebenfalls sehr gut.

In die Dispergierzone (19.1) die der Entgasungszone (15.1) nachgeordnet ist wurde Stickstoff als Strippmittel mit einer Rate von 0,5 bis 0,6 kg/h eingeleitet.
In die Dispergierzone (19.2) die der Entgasungszone (15.2) nachgeordnet ist wurde eine Dispersion aus Wasser mit Kalziumstearat (45 Gew.% Kalziumstearat) mit einer Rate von 3,6 kg/h eingeleitet.
In die Dispergierzone (19.3) die der Entgasungszone (15.3) nachgeordnet ist wurde eine Dispersion aus Wasser mit Kalziumstearat (45 Gew.-% Kalziumstearat) mit einer Rate von 3,6 kg/h eingeleitet.
Die Drehzahl der Extruderwellen des Hauptextruders betrug zwischen 60 min$^{-1}$ und 90 min$^{-1}$.
In Tabelle 2a) sind die in den jeweiligen Beispielen eingesetzten Schneckenelemente zusammengefasst.

**Tabelle 2a) eingesetzte Schneckenelemente**

| Beispiel | Entgasungszonen 15.1, 15.2 und 15.3 | Dispersionszonen 19.1, 19.2 und 19.3 |
|---|---|---|
| 3 | zweigängiges Standard Erdmenger-Profil analog zu Fig. 1 | Knetblöcke & Exzenterscheiben |
| 4 | zweigängiges Standard Erdmenger-Profil analog zu gemäß Fig. 1 | Knetblöcke & Exzenterscheiben |
| 5 | zweigängiges Schneckenelement mit stetig differenzierbarem Profil analog zu Fig. 2b | zweigängiges Schneckenelement mit stetig differenzierbarem Profil analog zu Fig. 2b |
| 6 | zweigängiges Standard Erdmenger-Profil analog zu Fig. 1 | zweigängiges Standard Erdmenger-Profil analog zu Fig. 1 |

**Tabelle 2b) Steigungshöhe t und Spaltmasse**

| Beispiel | Entgasungszonen 15.1, 15.2 und 15.3 |
|---|---|
| 3 | $R^1_{max\,n} = R^2_{max\,n} = 0{,}496\,D_n$, $t = 1{,}37\,D_n$ |
| 4 | $R^1_{max\,n} = R^2_{max\,n} = 0{,}474\,D_n$, $t = 1{,}37\,D_n$ |
| 5 | $R^1_{max\,n} = R^2_{max\,n} = 0{,}479\,D_n$, $t = 2{,}06\,D_n$ |
| 6 | $R^1_{max\,n} = R^2_{max\,n} = 0{,}474\,D_n$, $t = 2{,}06\,D_n$ |

**Tabelle 2c) Ergebnisse**

| Beispiel | Hexan-Gehalt im Produkt P [Gew.-ppm] | Gesamte flüchtige Stoffe incl. Wasser [Gew.-%] |
|---|---|---|
| 3 (zum Vergleich) | 2900 | <0,30 |

(fortgesetzt)

| Beispiel | Hexan-Gehalt im Produkt P [Gew.-ppm] | Gesamte flüchtige Stoffe incl. Wasser [Gew.-%] |
|---|---|---|
| 4 (zum Vergleich) | 3000 | <0,30 |
| 5 | 450 | <0,30 |
| 6 | 500 | <0,30 |

Aus den Beispielen wird Folgendes ersichtlich:

In Beispiel 3 ist keine Bedingung S1), S2) oder S3 erfüllt, das Entgasungsergebnis ist unbefriedigend.

In Beispiel 4 ist nur die Bedingung S1) erfüllt, das Entgasungsergebnis ist unbefriedigend.

In Beispiel 5 sind alle Bedingungen S1), S2) und S3) erfüllt, das Entgasungsergebnis ist sehr gut.

In Beispiel 6 sind die Bedingungen S1) und S2) erfüllt, das Entgasungsergebnis ist ebenfalls sehr gut.

## Patentansprüche

1.  Entgasungsvorrichtung umfassend zumindest einen Extruder, der aufweist:

   - ein Gehäuse und $n$ Gehäusebohrungen $B_n$ mit den dazugehörigen Bohrungsdurchmessern $D_n$ wobei $n$ eine ganze Zahl ist,
   - ein oder mehrere drehantreibbare Wellen $W_n$, die jeweils in einer der Gehäusebohrungen $B_n$ konzentrisch angeordnet sind, eine Drehachse $A_n$ aufweisen und mit Behandlungselementen ausgestattet sind, deren Querschnittsprofil in Umfangsrichtung aufweisen

      - $m$ relative Maxima $R^m_{max\,n}$ bezüglich der Radialausdehnung des Querschnittsprofils zur Drehachse $A_n$ der Welle $W_n$, wobei $m$ eine ganze Zahl von 1 bis 8 ist
      - einen Maximalwert $R_{max\,n}$ bezüglich der Radialausdehnung des Querschnittsprofils zur Drehachse $A_n$ der Welle $W_n$ wobei für $R_{max\,n}$ gilt, dass: $R_{max\,n} <= (D_n/2)$

   - zumindest eine Zuführzone,
   - eine oder mehrere Entgasungszonen umfassend jeweils zumindest eine Entgasungsöffnung, die zum Austrag von flüchtigen Bestandteilen aus einem polymerhaltigen Medium aus dem Extruder geeignet ist,
   - zumindest eine Austragszone,

   **dadurch gekennzeichnet, dass** der Extruder als Behandlungselemente Schneckenelemente SE mit einer Steigungshöhe $t$ aufweist, die so gestaltet sind, dass mindestens zwei der drei folgenden Bedingungen erfüllt sind:

   S1) das Querschnittsprofil weist bezogen auf die Radialausdehnung der Profilkurve zumindest ein relatives Maximum $R^m_{max\,n}$ auf, für das gilt:

$$0,430\ D_n >= R^m_{max\,n} < 0,485\ D_n$$

   S2) $1,60\ D_n < t < 3,00\ D_n$
   S3) das Querschnittprofil des jeweiligen Schneckenelements weist an den bezogen auf die in Drehrichtung vorn liegenden aktiven Flanken im Bereich der Radialausdehnung von $0,90\ R_{max}$ bis $R_{max}$ keinen Tangentenwinkel $\beta$ auf, der größer ist als 25°, wobei der Tangentenwinkel $\beta$ definiert ist als

      - der kleinere der beiden Winkel, die bei der Anlegung der Tangenten an einem beliebigen Punkt auf dem Querschnittsprofil des Behandlungselements auftreten, an dem das Querschnittsprofil nicht stetig differenzierbar ist
      - und 0° beträgt an einem beliebigen Punkt auf dem Querschnittsprofil des Behandlungselements, an dem das Querschnittsprofil stetig differenzierbar ist.

2. Entgasungsvorrichtung nach Anspruch 1, wobei

- n eine ganze Zahl von 1 bis 16, bevorzugt von 1 bis 12, besonders bevorzugt 1 bis 8 und noch weiter bevorzugt 2 ist und wobei sich die Gehäusebohrungen für den Fall dass n größer als 1 ist, vorzugsweise gegenseitig durchdringen und ebenfalls vorzugsweise parallel angeordnet sind; und/oder
- m eine ganze Zahl von 1 bis 4 ist, bevorzugt 1, 2 oder 3, besonders bevorzugt 1 oder 2 und noch weiter bevorzugt 2 ist.

3. Entgasungsvorrichtung nach Anspruch 1 oder 2, **dadurch gekennzeichnet, dass** die Schneckenelemente SE in Modulbauweise aus einer Kernwelle und Schneckenelementen, die eine Aufnahmeöffnung für die Kernwellen besitzen oder als Schnecken in Massivbauweise oder als Schneckenwellen, die aus einzelnen Teilsegmenten, die in Massivbauweise hergestellt sind, bestehen.

4. Entgasungsvorrichtung nach einem der Ansprüche 1 bis 3, **dadurch gekennzeichnet, dass** der Extruder der Entgasungsvorrichtung zumindest eine Dispergierzone aufweist.

5. Entgasungsvorrichtung nach einem der Ansprüche 1 bis 4, **dadurch gekennzeichnet, dass** die Schneckenelemente SE die Merkmale S1) und S2) oder S2) und S3) oder S1) und S3) oder alle drei Merkmale S1), S2) und S3) erfüllt sind.

6. Entgasungsvorrichtung nach einem der Ansprüche 1 bis 5, **dadurch gekennzeichnet, dass**

- die in Förderrichtung des Extruders (14) letzte Entgasungszone des Extruders, vorzugsweise alle Entgasungszonen mit Schneckenelementen SE ausgerüstet sind; und/oder
- die Anzahl der Entgasungszonen 1 bis 20, bevorzugt 1 bis 10 und besonders bevorzugt 2 bis 8 beträgt.

7. Entgasungsvorrichtung nach einem der Ansprüche 1 bis 6, **dadurch gekennzeichnet, dass** zumindest eine Entgasungszone, die in der Förderrichtung des Extruders (14) der Zuführzone (4) vorgeschaltet ist.

8. Entgasungsvorrichtung nach einem der Ansprüche 1 bis 7, **dadurch gekennzeichnet, dass** der Extruder zumindest eine Dispergierzone aufweist.

9. Entgasungsvorrichtung nach einem der Ansprüche 1 bis 8, **dadurch gekennzeichnet, dass** den Entgasungszonen in Förderrichtung des Extruders zumindest teilweise Entspannungselemente, wie insbesondere rotierende oder feststehende Lochplatten vorgeschaltet sind.

10. Entgasungsvorrichtung nach einem der Ansprüche 1 bis 9, **dadurch gekennzeichnet, dass** der Extruder ein oder mehrere Zuführöffnungen für die Zuführung von Additiven umfasst.

11. Entgasungsvorrichtung nach einem der Ansprüche 1 bis 10, **dadurch gekennzeichnet, dass** die Schneckenelemente SE ein Querschnittsprofil aufweisen, das vollständig durch eine stetig differenzierbare Profilkurve darstellbar ist.

12. Verfahren zum Entfernen flüchtiger Verbindungen aus einem polymerhaltigen Medium (PM), das zumindest ein Polymer und zumindest eine flüchtige Verbindung enthält, das zumindest die folgenden Schritte umfasst:

a) Bereitstellen einer Entgasungsvorrichtung nach einem der Ansprüche 1 bis 11
b) Zuführen des polymerhaltigen Mediums (PM) in die Entgasungsvorrichtung wobei diese so betrieben wird, dass flüchtige Verbindungen aus dem polymerhaltigen Medium (PM) durch die Entgasungsöffnungen der Entgasungseinheit entweichen und so das polymerhaltigen Medium (PM) an flüchtigen Verbindungen verarmt, und bei Austrag aus der Entgasungsvorrichtung das Polymer aus dem polymerhaltigen Medium als Produkt P gewonnen wird, das dann eine geringeren Anteil an flüchtigen Verbindungen aufweist als das in die Entgasungsvorrichtung zugeführte polymerhaltige Medium (PM).

13. Verfahren nach Anspruch 12, wobei das aus dem polymerhaltigen Medium als Produkt P gewonnene Polymer eine Gesamtkonzentration von flüchtigen Verbindungen von weniger als 1 Gew.-%, vorzugsweise weniger als 0,5 Gew.-% basierend auf der Masse des Polymers aufweist.

**14.** Verfahren nach Anspruch 12 oder 13, **dadurch gekennzeichnet dass** das polymerhaltige Medium thermoplastische Polymere wie beispielsweise Polycarbonate, Polyamide, Polyester, insbesondere Polybutylenterephthalat und Polyethylenterephthalat, Polylactide, Polyether, thermoplastische Polyurethane, Polyacetale, Fluorpolymere wie, insbesondere Polyvinylidenfluorid, Polyethersulfone, Polyolefine, insbesondere Polyethylen und Polypropylen, Polyimide, Polyacrylate, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrol- blockcopolymere und Polyvinylchlorid oder Elastomere wie beispielsweise Kautschuke aus der Reihe Styrol-Butadien-Kautschuke, Naturkautschuke, Butadien-Kautschuke, Isopren-Kautschuke, Ethylen-Propylen-Dien-Kautschuke wie beispielsweise Ethylenpropylendien (M-Klasse) Kautschuke (EPDM), Ethylen-Propylen-Kautschuke, Butadien-Acrylnitril-Kautschuke, hydrierte Nitrilkautschuke, Butylkautschuke, Halobutylkautschuke, Chloropren-Kautschuke, Ethylen-Vinylacetat-Kautschuke, Polyurethan-Kautschuke, Guttapercha, Fluorkautschuke, Siliconkautschuke, Sulfidkautschuke, Chlorsulfonyl-Polyäthylen-Kautschuke sowie beliebige Mischungen der vorgenannten thermoplastischen Polymere und Elastomere enthält.

**15.** Verfahren nach einem der Ansprüche 12 bis 14, **dadurch gekennzeichnet dass** das polymerhaltige Medium 3 bis 98 Gew.-% eines Polymers und 2 bis 97 Gew.-% flüchtige Verbindungen, insbesondere ein organisches Lösungsmittel oder ein organisches Lösemittel und Wasser enthält, wobei die oben genannten Komponenten bis zu 90 bis 100 Gew.-%, vorzugsweise 95 bis 100 Gew.-% der Gesamtmasse des polymerhaltigen Mediums ausmachen.

**Claims**

**1.** Devolatilisation apparatus comprising at least one extruder which has:

- a barrel and n barrel holes $B_n$ having the associated hole diameters $D_n$ where n is an integer,
- one or more screws $W_n$ which can be driven so as to rotate and are in each case arranged concentrically in one of the barrel holes $B_n$, have an axis of rotation $A_n$ and are equipped with treatment elements whose cross-sectional profile in the circumferential direction has
- m relative maxima $R^m_{max\,n}$ in respect of the radial dimension of the cross-sectional profile to the axis of rotation $A_n$ of the screw $W_n$, where m is an integer from 1 to 8,
- a maximum value $R_{max\,n}$ in respect of the radial dimension of the cross-sectional profile to the axis of rotation $A_n$ of the screw $W_n$, where $R_{max\,n}$ fulfils: $R_{max\,n} <= (D_n/2)$
- at least one feed zone,
- one or more devolatilisation zones comprising in each case at least one devolatilisation opening which is suitable for discharge of volatile constituents from a polymer-containing medium from the extruder,
- at least one discharge zone,

**characterized in that** the extruder has screw elements SE having a pitch t as treatment elements, which are configured so that at least two of the following three conditions are met:

S1) the cross-sectional profile has at least one relative maximum $R^m_{max\,n}$ based on the radial dimension of the profile curve, for which:

$$0.430\ D_n\ >=\ R^m_{max\,n}\ <\ 0.485\ D_n,$$

S2) $1.60\ D_n < t < 3.00\ D_n$,
S3) the cross-sectional profile of the respective screw element has no tangential angle $\beta$ greater than 25° on the active flanks located at the front in the direction of rotation in the range of the radial dimension from $0.90\ R_{max}$ to $R_{max}$, where the tangential angle $\beta$ is defined as

- the smaller of the two angles formed on drawing the tangents at any point on the cross-sectional profile of the treatment element at which the cross-sectional profile cannot be continually differentiated
- and is 0° at any point on the cross-sectional profile of the treatment element at which the cross-sectional profile can always be differentiated.

**2.** Devolatilisation apparatus according to Claim 1, where

- n is an integer from 1 to 16, preferably from 1 to 12, particularly preferably from 1 to 8 and even more preferably 2, and where the barrel holes in the case of n being greater than 1 preferably pass through opposite one another and are likewise preferably arranged parallel to one another; and/or
- m is an integer from 1 to 4, preferably 1, 2 or 3, particularly preferably 1 or 2 and even more preferably 2.

3. Devolatilisation apparatus according to Claim 1 or 2, **characterized in that** the screw elements SE have a modular construction and consist of a core shaft and screw elements which have an accommodation opening for the core shafts or are configured as screws having a solid construction or as screws consisting of individual subsegments and produced in solid construction.

4. Devolatilisation apparatus according to any of Claims 1 to 3, **characterized in that** the extruder of the devolatilisation apparatus has at least one dispersing zone.

5. Devolatilisation apparatus according to any of Claims 1 to 4, **characterized in that** the screw elements SE satisfy the features S1) and S2) or S2) and S3) or S1) and S3) or all three features S1), S2) and S3).

6. Devolatilisation apparatus according to any of Claims 1 to 5, **characterized in that**

- the last devolatilisation zone of the extruder in the transport direction of the extruder (14), preferably all devolatilisation zones, is/are equipped with screw elements SE; and/or
- the number of devolatilisation zones is from 1 to 20, preferably from 1 to 10 and particularly preferably from 2 to 8.

7. Devolatilisation apparatus according to any of Claims 1 to 6, **characterized in that** at least one devolatilisation zone is located upstream of the feed zone (4) of the extruder (14).

8. Devolatilisation apparatus according to any of Claims 1 to 7, **characterized in that** the extruder has at least one dispersing zone.

9. Devolatilisation apparatus according to any of Claims 1 to 8, **characterized in that** at least some depressurisation elements, in particular rotating or fixed perforated plates, are located upstream of the devolatilisation zones of the extruder.

10. Devolatilisation apparatus according to any of Claims 1 to 9, **characterized in that** the extruder comprises one or more feed openings for the introduction of additives.

11. Devolatilisation apparatus according to any of Claims 1 to 10, **characterized in that** the screw elements SE have a cross-sectional profile which can be represented completely by a profile curve which can be continually differentiated.

12. Process for removing volatile compounds from a polymer-containing medium (PM) which contains at least one polymer and at least one volatile compound, which process comprises at least the following steps:

a) provision of a devolatilisation apparatus according to any of Claims 1 to 11,
b) introduction of the polymer-containing medium (PM) into the devolatilisation apparatus which is operated so that volatile compounds are given off from the polymer-containing medium (PM) through the devolatilisation openings of the devolatilisation unit and the polymer-containing medium (PM) is in this way depleted in volatile compounds and the polymer is isolated as product P from the polymer-containing medium on discharge from the devolatilisation apparatus and the product P then has a lower proportion of volatile compounds than the polymer-containing medium (PM) introduced into the devolatilisation apparatus.

13. Process according to Claim 12, where the polymer isolated as product P from the polymer-containing medium has a total concentration of volatile compounds of less than 1% by weight, preferably less than 0.5% by weight, based on the mass of the polymer.

14. Process according to Claim 12 or 13, **characterized in that** the polymer-containing medium contains thermoplastic polymers such as polycarbonates, polyamides, polyesters, in particular polybutylene terephthalate and polyethylene terephthalate, polylactides, polyethers, thermoplastic polyurethanes, polyacetals, fluoro polymers, in particular polyvinylidene fluoride, polyether sulphones, polyolefins, in particular polyethylene and polypropylene, polyimides, polyacrylates, in particular poly(methyl) methacrylate, polyphenylene oxide, polyphenylene sulphide, polyether ketone, polyaryl ether ketone, styrene polymers, in particular polystyrene, styrene copolymers, in particular styreneacrylonitrile copolymer, acrylonitrile-butadienestyrene block copolymers, and polyvinyl chloride and also elastomers such as rubbers from the group consisting of styrene-butadiene rubbers, natural rubbers, butadiene rubbers, isoprene rubbers, ethylene-propylene-diene rubbers such as ethylene-propylene-diene (M class) rubbers (EPDM), ethylene-propylene rubbers, butadiene-acrylonitrile rubbers, hydrogenated nitrile rubbers, butyl rubbers, halobutyl rubbers, chloroprene rubbers, ethylene-vinyl acetate rubbers, polyurethane rubbers, guttapercha, fluoro rubbers, silicone rubbers, sulphide rubbers, chlorosulphonyl-polyethylene rubbers and also any mixtures of the abovementioned thermoplastic polymers and elastomers.

15. Process according to any of Claims 12 to 14, **characterized in that** the polymer-containing medium contains from 3 to 98% by weight of a polymer and from 2 to 97% by weight of volatile compounds, in particular an organic solvent or an organic solvent and water, where the abovementioned components make up up to 90-100% by weight, preferably from 95 to 100% by weight, of the total mass of the polymer-containing medium.

## Revendications

1. Dispositif de dégazage comprenant au moins une extrudeuse, qui comprend :

   - un boîtier et n alésages de boîtier $B_n$ ayant les diamètres d'alésage $D_n$ correspondants, n étant un nombre entier,
   - un ou plusieurs arbres entraînables en rotation $W_n$, qui sont respectivement agencés concentriquement dans un des alésages de boîtier $B_n$, présentent un axe de rotation $A_n$ et sont équipés d'éléments de traitement, dont le profil de section transversale présente dans la direction périphérique
   - m maxima relatifs $R^m_{max\ n}$ au regard de l'étendue radiale du profil de section transversale par rapport à l'axe de rotation $A_n$ de l'arbre $W_n$, m étant un nombre entier de 1 à 8,
   - une valeur maximale $R_{max\ n}$ au regard de l'étendue radiale du profil de section transversale par rapport à l'axe de rotation $A_n$ de l'arbre $W_n$, avec pour $R_{max\ n}$ : $R_{max\ n} <= (D_n/2)$,
   - au moins une zone d'introduction,
   - une ou plusieurs zones de dégazage comprenant chacune au moins une ouverture de dégazage, qui est appropriée pour le déchargement de constituants volatils à partir d'un milieu contenant un polymère à partir de l'extrudeuse,
   - au moins une zone de déchargement,

   **caractérisé en ce que** l'extrudeuse comprend en tant qu'éléments de traitement des éléments de vis SE ayant un pas t, qui sont configurés de telle sorte qu'au moins deux des trois conditions suivantes soient satisfaites :

   S1) le profil de section transversale présente par rapport à l'étendue radiale de la courbe de profil au moins un maximum relatif $R^m_{max\ n}$, pour lequel :

$$0,430\ D_n >= R^m_{max\ n} < 0,485\ D_n,$$

   S2) $1,60\ D_n < t < 3,00\ D_n$,
   S3) le profil de section transversale de l'élément de vis respectif ne présente sur les flancs actifs situés à l'avant dans la direction de rotation dans la zone de l'étendue radiale de $0,90\ R_{max}$ à $R_{max}$ aucun angle tangentiel β qui est supérieur à 25°, l'angle tangentiel β étant défini par

   - le plus petit des deux angles qui se forment lors de l'application de la tangente à un point quelconque sur le profil de section transversale de l'élément de traitement, au niveau duquel le profil de section transversale n'est pas différenciable en continu,
   - et étant de 0 °C à un point quelconque sur le profil de section transversale de l'élément de traitement au niveau duquel le profil de section transversale est différenciable en continu.

2. Dispositif de dégazage selon la revendication 1, dans lequel

   - n est un nombre entier de 1 à 16, de préférence de 1 à 12, de manière particulièrement préférée de 1 à 8 et de manière encore davantage préférée de 2, et les alésages de boîtier pour le cas où n est supérieur à 1 s'interpénètrent de préférence mutuellement et sont également de préférence agencés en parallèle ; et/ou
- m est un nombre entier de 1 à 4, de préférence 1, 2 ou 3, de manière particulièrement préférée 1 ou 2, et de manière encore davantage préférée 2.

3. Dispositif de dégazage selon la revendication 1 ou 2, **caractérisé en ce que** les éléments de vis SE sont constitués en construction modulaire par un arbre central et des éléments de vis, qui comprennent une ouverture de réception pour les arbres centraux, ou sous la forme de vis en construction massive ou sous la forme d'arbres de vis, qui sont constitués par des segments partiels individuels, qui sont fabriqués en construction massive.

4. Dispositif de dégazage selon l'une quelconque des revendications 1 à 3, **caractérisé en ce que** l'extrudeuse du dispositif de dégazage comprend au moins une zone de dispersion.

5. Dispositif de dégazage selon l'une quelconque des revendications 1 à 4, **caractérisé en ce que** les éléments de vis SE satisfont les caractéristiques S1) et S2) ou S2) et S3) ou S1) et S3) ou les trois caractéristiques S1), S2) et S3).

6. Dispositif de dégazage selon l'une quelconque des revendications 1 à 5, **caractérisé en ce que**

   - la dernière zone de dégazage de l'extrudeuse dans la direction de transport de l'extrudeuse (14), de préférence toutes les zones de dégazage, sont équipées d'éléments de vis SE ; et/ou
   - le nombre de zones de dégazage est de 1 à 20, de préférence de 1 à 10 et de manière particulièrement préférée de 2 à 8.

7. Dispositif de dégazage selon l'une quelconque des revendications 1 à 6, **caractérisé en ce qu'**au moins une zone de dégazage est raccordée en amont de la zone d'introduction (4) dans la direction de transport de l'extrudeuse (14).

8. Dispositif de dégazage selon l'une quelconque des revendications 1 à 7, **caractérisé en ce que** l'extrudeuse comprend au moins une zone de dispersion.

9. Dispositif de dégazage selon l'une quelconque des revendications 1 à 8, **caractérisé en ce que** des éléments de détente, tels que notamment des plaques perforées rotatives ou fixes, sont au moins partiellement raccordés en amont des zones de dégazage dans la direction de transport de l'extrudeuse.

10. Dispositif de dégazage selon l'une quelconque des revendications 1 à 9, **caractérisé en ce que** l'extrudeuse comprend une ou plusieurs ouvertures d'introduction pour l'introduction d'additifs.

11. Dispositif de dégazage selon l'une quelconque des revendications 1 à 10, **caractérisé en ce que** les éléments de vis SE présentent un profil de section transversale qui peut être représenté en totalité par une courbe de profil différenciable en continu.

12. Procédé d'élimination de composés volatils à partir d'un milieu contenant un polymère (PM), qui contient au moins un polymère et au moins un composé volatil, qui comprend au moins les étapes suivantes :

   a) la mise à disposition d'un dispositif de dégazage selon l'une quelconque des revendications 1 à 11,
   b) l'introduction du milieu contenant un polymère (PM) dans le dispositif de dégazage, celui-ci étant exploité de telle sorte que des composés volatils s'échappent à partir du milieu contenant un polymère (PM) par les ouvertures de dégazage de l'unité de dégazage et que le milieu contenant un polymère (PM) soit ainsi appauvri en composés volatils et que, lors du déchargement du dispositif de dégazage, le polymère soit obtenu à partir du milieu contenant un polymère en tant que produit P, qui présente alors une proportion plus faible de composés volatils que le milieu contenant un polymère (PM) introduit dans le dispositif de dégazage.

13. Procédé selon la revendication 12, dans lequel le polymère obtenu en tant que produit P à partir du milieu contenant un polymère présente une concentration totale en composés volatils de moins de 1 % en poids, de préférence de moins de 0,5 % en poids, par rapport à la masse du polymère.

14. Procédé selon la revendication 12 ou 13, **caractérisé en ce que** le milieu contenant un polymère contient des polymères thermoplastiques tels que par exemple des polycarbonates, des polyamides, des polyesters, notamment du polybutylène téréphtalate et du polyéthylène téréphtalate, des polylactides, des polyéthers, des polyuréthanes thermoplastiques, des polyacétals, des polymères fluorés tels que notamment du polyfluorure de vinylidène, des polyéther-sulfones, des polyoléfines, notamment du polyéthylène et du polypropylène, des polyimides, des polyacrylates, notamment du polyméthacrylate de méthyle, du polyoxyde de phénylène, du polysulfure de phénylène, de la polyéther-cétone, de la polyaryléther-cétone, des polymères de styrène, notamment du polystyrène, des copolymères de styrène, notamment du copolymère de styrène-acrylonitrile, des copolymères séquencés d'acrylonitrile-butadiène-styrène et du polychlorure de vinyle ou des élastomères tels que par exemple des caoutchoucs de la série des caoutchoucs de styrène-butadiène, des caoutchoucs naturels, des caoutchoucs de butadiène, des caoutchoucs d'isoprène, des caoutchoucs d'éthylène-propylène-diène tels que par exemple des caoutchoucs d'éthylène-propylène-diène (classe M) (EPDM), des caoutchoucs d'éthylène-propylène, des caoutchoucs de butadiène-acrylonitrile, des caoutchoucs de nitrile hydrogénés, des caoutchoucs de butyle, des caoutchoucs d'halobutyle, des caoutchoucs de chloroprène, des caoutchoucs d'éthylène-acétate de vinyle, des caoutchoucs de polyuréthane, du guttapercha, des caoutchoucs fluorés, des caoutchoucs de silicone, des caoutchoucs de sulfure, des caoutchoucs de chlorosulfonyl-polyéthylène, ainsi que des mélanges quelconques des polymères et élastomères thermoplastiques susmentionnés.

15. Procédé selon l'une quelconque des revendications 12 à 14, **caractérisé en ce que** le milieu contenant un polymère contient 3 à 98 % en poids d'un polymère et 2 à 97 % en poids de composés volatils, notamment un solvant organique ou un solvant organique et de l'eau, les composants mentionnés précédemment représentant jusqu'à 90 à 100 % en poids, de préférence 95 à 100 % en poids de la masse totale du milieu contenant un polymère.

# Fig.1

EP 2 760 658 B1

# Fig.2a

RG = 0.5800

RA = 0.5700
RF = 0.5600
S = 0.0200
D = 0.0200
T = 2.0000

$R^1_{max_2}$

$R^1_{min_2}$

A2

$R^2_{max_2}$

D

# Fig.2b

RG = 0.5800

RA = 0.5600
RF = 0.5500
S = 0.0200
D = 0.0300
T = 2.0000

$R^1_{max_2}$

$R^1_{min_2}$

A2

$R^2_{max_2}$

D

# Fig.2c

RG = 0.5800

RA = 0.5700
RF = 0.5500
S = 0.0400
D = 0.0300
T = 2.0000

$R^1_{max_2}$

$R^2_{max_2}$

A2

D

# Fig.2d

RG = 0.5800

RA = 0.5600
RF = 0.5500
S = 0.0600
D = 0.0300
T = 2.0000

$R^1_{max_2}$

$R^2_{max_2}$

A2

D

# Fig.3

*Fig.4*

EP 2 760 658 B1

*Fig.5*

*Fig.6*

PM (PM-Ⅲ)

PM (PM-Ⅱ)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009153000 A
- DE 1180718 A
- WO 2009152968 A
- WO 2011039016 A
- EP 1617985 A1
- EP 0861717 A1
- EP 1127609 A2
- EP 1165302 A1
- WO 2010031823 A
- EP 2011054415 W

- US 4055001 A
- US 4173417 A1
- US 5487602 A1
- US 2001056176 A1
- JP 59048136 A
- US 3501807 A
- DE 3431063
- DE 623903
- EP 2011062636 W
- EP 2353839 A

**In der Beschreibung aufgeführte Nicht-Patentliteratur**

- *Monomeren, Oligomeren sowie Hilfs- und Lösungsmitteln aus polymerhaltigen Medien,* vol. 1, 192-212

- Twin-Screw Extruders. Hanser Verlag, 2007
- **C.G. HAGBERG.** *Process Machinery,* Marz 2000